# FASCICULE DE BREVET EUROPEEN

(11) **EP 3 972 771 B1**
(45) Date de publication et mention de la délivrance du brevet: **12.07.2023**
(21) Numéro de dépôt: 20728692.3
(22) Date de dépôt: 20.05.2020
(51) Int. Cl.: B23K 15/00, B23K 15/04, B23K 15/06, H05H 7/20, B23K 101/04

(54) **APPAREIL À SOUDER PAR FAISCEAU D'ÉLECTRONS**
ELEKTRONENSTRAHLSCHWEISSGERÄT
ELECTRON BEAM WELDING APPARATUS

(30) Priorité: 21.05.2019 FR 1905311
(43) Date de publication de la demande: 30.03.2022
(73) Titulaire: TECHMETA ENGINEERING SAS, 74370 Epagny Metz-Tessy (FR)
(72) Inventeur: OVING, Peter, 38340 Voreppe (FR)
(74) Mandataire: Novaimo
(86) Numéro de dépôt international: PCT/EP2020/064031
(87) Numéro de publication internationale: WO 2020/234334

(56) Documents cités:
- EP-A1- 2 571 337
- JP-A- 2000 260 599
- US-A1- 2018 147 655

## Description

### Domaine Technique de l'invention

L'invention concerne un appareil à souder par faisceau d'électrons comme défini dans le préambule de la revendication 1 (voir, par exemple, EP2571337A1). L'invention porte aussi sur un équipement de soudure comprenant un tel appareil à souder. L'invention porte encore sur un procédé de soudage de deux pièces présentant une ouverture centrale au moyen d'un tel appareil à souder ou au moyen d'un tel équipement de soudure.

### Etat de la technique antérieure

Pour l'assemblage par soudure de deux pièces, plusieurs techniques sont aujourd'hui disponibles. Parmi ces techniques, le soudage par faisceau d'électrons est un procédé de soudage utilisant l'interaction d'un faisceau d'électrons avec les pièces à assembler. Des électrons lancés à grande vitesse dans le vide impactent les deux pièces au niveau de leur interface. L'énergie cinétique importante des électrons est alors transformée en chaleur au moment de l'impact, ce qui provoque la fusion puis le soudage des matériaux. La possibilité de concentrer le faisceau d'électrons sur une zone étroite permet d'obtenir un assemblage présentant peu de déformation et dans lequel la zone affectée thermiquement est restreinte. Cette technique est donc privilégiée pour les assemblages requérant une grande précision et une grande qualité.

En particulier, l'assemblage par soudure de cellules en niobium constituant une cavité accélératrice de particules doit être réalisé avec le plus grand soin de manière à éviter tout défaut de la surface intérieure des cellules. En effet, de tels défauts pourraient considérablement diminuer les performances de l'accélérateur de particules.

Les cellules constituant une cavité accélératrice de particules sont des pièces de révolution présentant une ouverture centrale traversante. Pour obtenir un état de surface aussi bon que possible pour l'assemblage de deux cellules d'une cavité accélératrice de particules, la soudure doit être réalisée de préférence par l'intérieur, c'est-à-dire que la ligne de soudure doit de préférence être établie le long d'un périmètre intérieur des cellules à assembler. L'appareil à souder nécessaire pour cette opération doit donc pouvoir être introduit par l'ouverture centrale à l'intérieur des cellules à souder. A cet effet, on connait l'usage d'appareil à souder comprenant un bras destiné à être introduit à l'intérieur des cellules. Le bras s'étend parallèlement à l'axe de révolution des cellules à souder et il se termine par un coude permettant d'orienter le faisceau d'électrons parallèlement à l'un des rayons des cellules.

Les appareils à souder connus de l'état de la technique produisent en sortie un faisceau d'électrons mal maîtrisé. Notamment, la distribution de densité du faisceau d'électrons en sortie de l'appareil à souder peut être mal maitrisée, ce qui conduit à chauffer une zone trop large ou trop étroite au niveau de l'interface entre les deux pièces à souder. La température atteinte par le métal peut être par conséquent également mal maitrisée. Le cordon de soudure peut alors présenter des défauts de forme ou de structure. Des projections de métal peuvent également se produire lors de la soudure. Ces projections peuvent se redéposer ensuite sur les deux pièces à souder ce qui les endommage.

De plus, l'axe du faisceau d'électrons peut être influencé par de nombreux paramètres de fonctionnement. L'axe du faisceau peut alors se trouver décalé par rapport à l'interface entre les deux cellules à souder ce qui provoque également un défaut de soudure.

Par ailleurs, les bras équipant les appareils à souder existant sont souvent volumineux. Ils ne peuvent donc pas être introduits à l'intérieur de pièces présentant une ouverture centrale de faible diamètre. Les bras peuvent également être insuffisamment long pour assembler plusieurs cellules le long de leur axe de révolution. Un faible diamètre associé avec une grande longueur du bras provoque une baisse de rigidité du bras et, généralement, un guidage dégradé du faisceau d'électrons. La réduction du diamètre du bras et l'augmentation de sa longueur apparaissent donc antinomiques de la précision du faisceau d'électrons.

Enfin, pour le réglage des faisceaux d'électrons, de nombreuses manipulations sont généralement nécessaires. Notamment, il est souvent nécessaire d'ouvrir l'enceinte sous vide dans laquelle est placée l'appareil à souder pour inspecter les pièces ou procéder à des réglages. L'ouverture de l'enceinte détériore le vide qui y est établit. Le vide doit ensuite à nouveau être obtenu pour pouvoir procéder à une opération de soudage. Ces interventions sont donc fastidieuses et non compatibles avec une utilisation industrielle de l'équipement de soudure.

### Présentation de l'invention

Le but de l'invention est de fournir un appareil à souder remédiant aux inconvénients ci-dessus et améliorant les appareils à souder connus de l'art antérieur.

Plus précisément, un premier objet de l'invention est un appareil à souder par faisceau d'électrons apte à produire des faisceaux d'électrons avec des distributions de densité variées et bien maitrisées.

Un second objet de l'invention est un appareil à souder par faisceau d'électrons apte à produire un faisceau d'électrons parfaitement positionné.

Un troisième objet de l'invention est un appareil à souder par faisceau d'électrons simple à configurer et ne nécessitant pas d'ouvrir l'enceinte dans laquelle il se trouve pour être réglé.

Un quatrième objet de l'invention est un appareil à souder par faisceau d'électrons particulièrement compact, permettant de souder par l'intérieur deux pièces comprenant une ouverture centrale de faible diamètre, les deux pièces comprenant également une grande longueur.

### Résumé de l'invention

L'invention se rapporte à un appareil à souder par faisceau d'électrons comprenant :
- un canon à électrons apte à générer un faisceau d'électrons,
- un moyen de focalisation apte à orienter le faisceau d'électrons selon un premier axe,
- un bras s'étendant parallèlement au premier axe, le bras comprenant :
   - un moyen de transformation d'une distribution de densité du faisceau d'électrons dans un plan perpendiculaire au premier axe, et
   - un moyen de déviation du faisceau d'électrons selon un deuxième axe sensiblement perpendiculaire au premier axe.

Le moyen de transformation peut comprendre au moins deux bobines, de préférence au moins quatre bobines, notamment au moins six bobines, les au moins deux bobines formant un axe magnétique sensiblement perpendiculaire audit premier axe, les au moins deux bobines étant réparties autour dudit premier axe de sorte à produire une alternance de pôles magnétiques Nord et de pôles magnétiques Sud.

Le canon à électrons, le moyen de focalisation, le moyen de transformation et le moyen de déviation peuvent être agencés dans cet ordre en suivant le parcours du faisceau d'électrons, le moyen de focalisation comprenant une distance focale variable, le moyen de focalisation étant apte à focaliser le faisceau d'électrons en un point de focalisation positionné en amont du moyen de transformation et le moyen de focalisation étant apte à focaliser le faisceau d'électrons en un point de focalisation positionné en aval du moyen de transformation.

Le moyen de déviation peut comprendre une bobine apte à produire un champ magnétique orienté sensiblement perpendiculairement audit premier axe lorsque ladite bobine est parcourue par un courant électrique, ladite bobine étant positionnée sensiblement dans le prolongement du premier axe, derrière ledit deuxième axe.

Le moyen de déviation peut comprendre un noyau magnétique agencé à l'intérieur de ladite bobine, une première plaque métallique liée au noyau magnétique par un premier flanc polaire, une deuxième plaque métallique liée au noyau magnétique par un deuxième flanc polaire, la première plaque et la deuxième plaque étant agencées symétriquement de part et d'autre dudit premier axe, la première plaque et la deuxième plaque comprenant chacune une face d'entrée et une face de sortie, la face d'entrée formant avec ledit deuxième axe un angle compris entre 15° et 40° inclus, la face de sortie formant avec ledit premier axe un angle compris entre 0° et 15° inclus..

L'appareil à souder peut comprendre un vidéoscope pour observer un impact du faisceau d'électrons, le vidéoscope s'étendant sensiblement le long d'un axe parallèle audit premier axe, le vidéoscope étant positionné à l'arrière du moyen de déviation à l'intérieur d'un volume défini par la projection du moyen de déviation selon ledit premier axe.

Le vidéoscope peut être rétractable parallèlement au premier axe, et il peut être apte à s'étendre entre la première plaque et la deuxième plaque.

L'appareil à souder peut comprendre un diaphragme de protection pour protéger un élément de l'appareil à souder du faisceau d'électrons en cas de déviation accidentelle du faisceau d'électrons,
et/ou,
il peut comprendre un élément bloqueur de champ magnétique interposé entre le moyen de transformation et le moyen de déviation,
   et/ou,
il peut comprendre un écran thermique, notamment un écran thermique refroidi par un système de refroidissement,
   et/ou,
il peut comprendre un capot de protection positionné de sorte à protéger une pièce à souder et/ou un élément de l'appareil à souder de projections métalliques issues d'une pièce à souder.

Le bras peut comprendre globalement la forme d'un cylindre, ledit cylindre comprenant un axe de révolution décalé d'une valeur non nulle par rapport audit premier axe, et/ou
ledit cylindre comprenant un diamètre inférieur ou égal à 80mm, notamment inférieur ou égal à 70mm, de préférence inférieur ou égal à 60mm,
   et/ou
ledit cylindre comprenant une longueur suivant ledit premier axe supérieure ou égale à 200mm, notamment supérieure ou égale à 400 mm, de préférence supérieure ou égale à 600mm.

L'appareil à souder peut comprendre :
- un moyen de déflection du faisceau d'électrons, et
- un moyen de détection de la position du faisceau d'électrons, le moyen de détection comprenant deux électrodes agencées de part et d'autre du premier axe, chaque électrode étant apte à détecter un contact avec le faisceau d'électrons.

L'appareil à souder peut comprendre :
- un moyen de déflection du faisceau d'électrons, et
- un moyen de détection de la position du faisceau d'électrons, le moyen de détection comprenant quatre électrodes agencées aux quatre côtés d'un carré autour du premier axe, chaque électrode étant apte à détecter un contact avec le faisceau d'électrons.

L'invention se rapporte également à un équipement de soudure comprenant un bâti destiné à reposer sur un sol et un appareil à souder tel que défini précédemment, l'appareil à souder étant mobile en rotation autour dudit premier axe par rapport au bâti.

L'invention se rapporte également à un procédé de soudage de deux pièces comprenant une ouverture centrale, par un faisceau d'électrons généré par un appareil à souder tel que défini précédemment ou par un équipement de soudure tel que défini précédemment, le procédé de soudage comprenant :
- une étape de positionnement des deux pièces destinées à être soudées l'une à l'autre autour du bras de l'appareil à souder,
- une étape de calibration du moyen de transformation pour produire un faisceau d'électrons comprenant une distribution de densité prédéfinie en sortie de l'appareil à souder,
- une étape de projection d'un faisceau d'électrons sur une interface formée entre les deux pièces.

L'étape de calibration peut être définie pour produire un faisceau d'électrons dont la densité est distribuée soit parallèlement à une interface formée entre les deux pièces, soit perpendiculairement à une interface formée entre les deux pièces, soit de manière circulaire et uniforme, soit selon toute forme intermédiaire entre une distribution parallèle à l'interface et une distribution circulaire et uniforme, soit selon toute forme intermédiaire entre une distribution perpendiculaire à l'interface et une distribution circulaire et uniforme, et l'étape de projection peut être une étape de soudure des deux pièces, notamment une soudure de type trou de serrure, ou une étape de lissage d'une soudure, ou une étape réparation locale d'une soudure, notamment une étape de traitement de fin de cordon d'une soudure.

L'étape de calibration peut être définie pour produire un faisceau d'électrons dont la densité est distribuée perpendiculairement à une interface formée entre les deux pièces, et l'étape de projection peut être une étape de lissage d'une soudure préalablement formée entre les deux pièces.

L'étape de calibration peut être définie pour produire un faisceau d'électrons dont la densité est distribuée de manière circulaire et uniforme, et l'étape de projection peut être une étape de réparation locale d'une soudure ou une étape de traitement de fin de cordon d'une soudure, notamment la puissance du faisceau d'électrons étant progressivement réduite jusqu'à zéro lorsque le faisceau d'électrons atteint la fin du cordon de soudure.

Le canon à électrons peut comprendre une anode et une cathode, une tension électrique entre l'anode et la cathode étant inférieure ou égale à 60kV, notamment inférieure ou égale à 45kV lors de l'étape de projection.

L'invention se rapporte également à un procédé de réglage d'un appareil à souder tel que défini précédemment, le procédé de réglage comprenant :
- une étape de déflection oscillante du faisceau d'électrons, le faisceau d'électrons oscillant dans un premier plan défini entre une première électrode et une deuxième électrode du moyen de détection, la deuxième électrode étant opposée à la première électrode par rapport au faisceau d'électrons, l'amplitude de l'oscillation étant croissante avec le temps, puis
- une étape de détection d'un contact du faisceau d'électrons sur une électrode parmi la première électrode et la deuxième électrode, puis
- une étape de déflection oscillante du faisceau d'électrons, le faisceau d'électrons oscillant dans le premier plan, l'amplitude de la sinusoïde étant maintenue à la valeur atteinte au moment du contact du faisceau d'électrons sur ladite électrode, un premier offset croissant avec le temps étant appliqué sur le faisceau d'électrons pour le décaler progressivement vers l'autre électrode parmi la première électrode et la deuxième électrode, puis

- une étape de détection d'un contact du faisceau d'électrons sur ladite autre électrode, puis
- une étape de centrage du faisceau d'électrons en décalant le faisceau d'électrons vers ladite autre électrode d'une valeur égale au premier offset appliqué sur le faisceau d'électrons au moment de son contact avec ladite autre électrode divisé par deux.

Le procédé de réglage peut également comprendre :
- une étape de déflection oscillante du faisceau d'électrons, le faisceau d'électrons oscillant dans un deuxième plan défini entre une troisième électrode et une quatrième électrode du moyen de détection, la quatrième électrode étant opposée à la troisième électrode par rapport au faisceau d'électrons, le deuxième plan étant perpendiculaire au premier plan, l'amplitude de l'oscillation étant croissante avec le temps, puis
- une étape de détection d'un contact du faisceau d'électrons sur une électrode parmi la troisième électrode et la quatrième électrode, puis
- une étape de déflection oscillante du faisceau d'électrons, le faisceau d'électrons oscillant dans le deuxième plan, l'amplitude de l'oscillation étant maintenue à la valeur atteinte au moment du contact du faisceau d'électrons sur ladite électrode, un deuxième offset croissant avec le temps étant appliqué sur le faisceau d'électrons pour le décaler progressivement vers l'autre électrode parmi la troisième électrode et la quatrième électrode, puis
- une étape de détection d'un contact du faisceau d'électrons sur ladite autre électrode, puis
- une étape de centrage du faisceau d'électrons en décalant le faisceau d'électrons vers ladite autre électrode d'une valeur égale à le deuxième offset appliqué sur le faisceau d'électrons au moment de son contact avec ladite autre électrode divisé par deux.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue en coupe de dessus d'un équipement de soudure selon un mode de réalisation de l'invention.
La figure 2 est une vue schématique de dessus de l'équipement de soudure.
La figure 3 est une vue en coupe de dessus d'une première partie d'un appareil à souder selon un mode de de réalisation de l'invention.
La figure 4 est une vue en coupe de dessus d'une deuxième partie de l'appareil à souder.
La figure 5A est une vue schématique de face de l'appareil à souder, un faisceau d'électrons issu de l'appareil à souder étant orienté horizontalement.
La figure 5B est une vue schématique de face de l'appareil à souder, le faisceau d'électrons étant légèrement incliné vers le haut par rapport à l'horizontale.
La figure 5C est une vue schématique de face de l'appareil à souder, le faisceau d'électrons étant légèrement incliné vers le bas par rapport à l'horizontale.
La figure 6 est une vue en coupe et de face d'un moyen de transformation de l'appareil à souder.
La figure 7 est un plan en coupe d'un moyen de déviation de l'appareil à souder
La figure 8 est une première vue en perspective d'une partie d'un bras de l'appareil à souder.
La figure 9 est une première vue en perspective du moyen de déviation.
La figure 10 est une deuxième vue en perspective de ladite partie du bras de l'appareil à souder.
La figure 11 est une deuxième vue en perspective du moyen de déviation.
La figure 12 est une vue en coupe de dessus de l'extrémité du bras, le bras comprenant un vidéoscope en position déployée.
La figure 13 est une vue schématique de face d'un moyen de détection de l'appareil à souder.
La figure 14 comprend deux graphiques illustrant un procédé de centrage du faisceau d'électrons.
La figure 15 est une vue schématique de l'équipement de soudure lors d'une opération de soudure.
La figure 15A est une représentation d'une première projection d'un faisceau d'électrons sur une interface entre deux pièces à souder.
La figure 15B est une représentation d'une deuxième projection d'un faisceau d'électrons sur l'interface entre les deux pièces à souder.
La figure 15C est une représentation d'une troisième projection d'un faisceau d'électrons sur l'interface entre les deux pièces à souder.
La figure 16 est une deuxième vue en coupe de dessus de l'équipement de soudure.

### Description détaillée

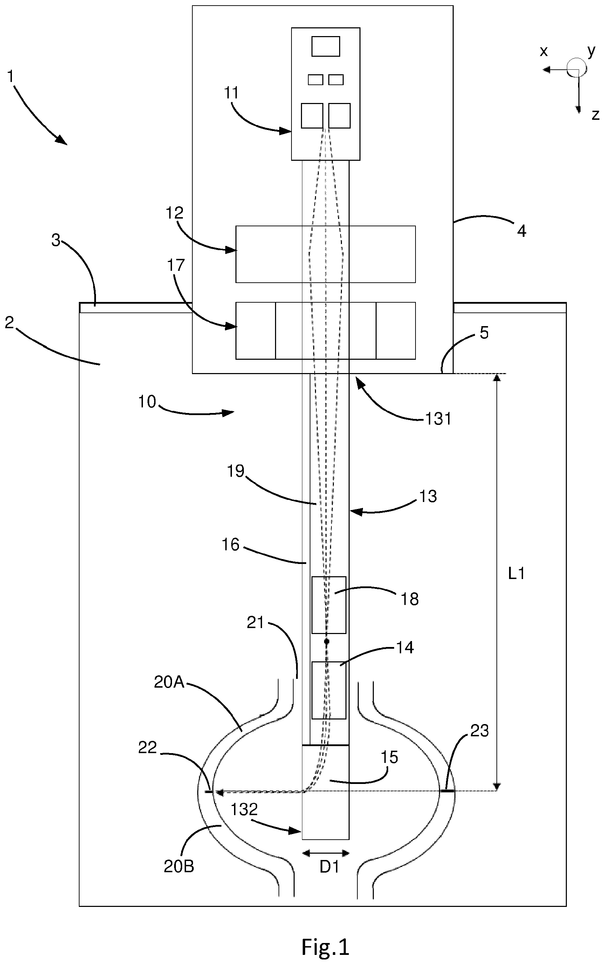

La figure 1 illustre schématiquement un équipement de soudure 1 équipé d'un appareil à souder 10 selon un mode de réalisation de l'invention. L'équipement de soudure 1 comprend en outre une enceinte 2 enveloppant l'appareil à souder 10 et un bâti 3. L'équipement de soudure 1 peut être installé dans un atelier et reposer sur le sol par l'intermédiaire de son bâti 3.

L'appareil à souder 10 est un appareil à souder par faisceau d'électrons. C'est-à-dire qu'il est apte à projeter un faisceau d'électrons FE sur une pièce à souder afin de la faire fondre localement. Le faisceau d'électrons est un flux d'électrons qui est projeté sur la pièce à souder. L'énergie dissipée par l'impact des électrons sur la pièce à souder provoque un échauffement et donc la fusion locale du matériau. La puissance de l'appareil à souder est notamment adaptée pour souder des pièces métalliques, par exemple des pièces en niobium, en cuivre, en aluminium ou en tout autre type de métal. En particulier, l'appareil à souder 10 est adapté pour souder deux pièces 20A, 20B présentant une ouverture centrale 21 en étant introduit à l'intérieur de cette ouverture centrale. Les deux pièces 20A, 20B sont soudées l'une à l'autre grâce à un cordon de soudure 22 formé au niveau de leur interface 23. L'interface 23 désigne le joint ou autrement dit la ligne de jonction séparant les deux pièces 20A, 20B. Cette interface 23 correspond à un périmètre intérieur des deux pièces lorsque cette interface est circulaire.

La soudure par faisceau d'électrons requiert que le faisceau d'électrons se propage dans le vide. L'enceinte 2 peut donc se refermer hermétiquement autour des pièces à souder et de l'appareil à souder et une pompe à vide peut alors faire le vide dans l'enceinte. Un ordre de grandeur du niveau de dépression atteint dans l'enceinte peut être par exemple compris entre 10-2 mBar et 10-6 mBar.

Les deux pièces 20A, 20B peuvent être de toute nature. Avantageusement, les deux pièces peuvent être des cellules, des moitiés de cellules, ou un assemblage d'éléments de cellules destinées à former une cavité accélératrice de particules. Elles peuvent être fabriquées en niobium. La soudure de deux moitiés de cellules permet d'obtenir une cellule telle que représentée schématiquement et à titre d'exemple sur la figure 1. De telles cellules peuvent être assemblées en série pour former une cavité équipant un accélérateur de particules. Sur la figure 1, l'ensemble formé par les deux moitiés de cellule 20A, 20B a la forme d'une ellipsoïde de révolution et le cordon de soudure 22 est établi à hauteur du plus grand périmètre intérieur de la cellule. En variante, la forme des pièces pourrait être différente, notamment elles pourraient être simplement tubulaire.

Selon une autre variante, les deux pièces à souder pourraient ne pas être des pièces de révolution ou tout au moins l'interface 23 entre les deux pièces 20A, 20B pourrait ne pas dessiner un cercle. Auquel cas, la distance parcourue par le faisceau d'électrons avant d'impacter les deux pièces à souder pourrait être variable en fonction de l'orientation des pièces à souder. Notamment, une pièce à rayon variable pourrait être soudée en modifiant les paramètres de fonctionnement du faisceau d'électrons.

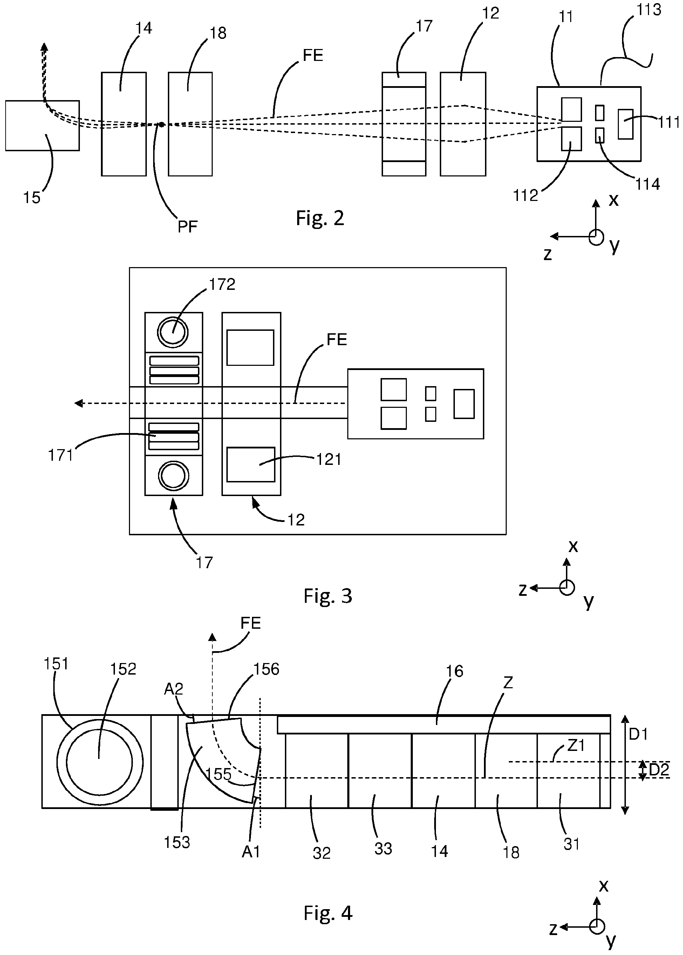

L'appareil à souder 10 comprend notamment un canon à électrons 11, un moyen de focalisation 12 et un bras 13. Le bras comprend notamment un moyen de transformation 14 du faisceau d'électrons et un moyen de déviation 15 du faisceau d'électrons. Comme cela apparait sur la représentation schématique de l'appareil à souder sur la figure 2, le canon à électrons 11, le moyen de focalisation 12, le moyen de transformation 14 et le moyen de déviation 15 sont agencés dans cet ordre en suivant le parcours du faisceau d'électrons FE.

Le canon à électrons 11 est un moyen apte à générer le faisceau d'électrons FE. Il peut notamment comprendre une cathode 111, une anode 112, et éventuellement un wehnelt 114 interposé entre la cathode et l'anode. La cathode est apte à émettre des électrons. Elle peut par exemple se trouver sous la forme d'un filament ou d'une pièce émettrice massive ou creuse. Par exemple, les électrons peuvent être extraits d'une cathode chaude thermo-émissive ou gazeuse. Le wehnelt permet de réguler la quantité d'électrons émis par la cathode. En particulier, la différence de tension entre wehnelt et cathode permet soit de bloquer les électrons et d'empêcher l'émission du faisceau d'électrons, soit de laisser passer une partie ou tout le flux d'électrons émis par la cathode. L'anode est apte à attirer les électrons grâce à une tension électrique U appliquée entre la cathode et l'anode. La tension électrique U entre l'anode et la cathode peut atteindre par exemple une valeur de l'ordre de plusieurs dizaines de kilovolts. L'équipement de soudure comprend donc un moyen d'alimentation électrique 113 qui peut être relié à un réseau de distribution d'électricité. L'anode, le wehnelt et la cathode peuvent être assemblés de sorte à être mécaniquement alignés selon un premier axe Z. Ainsi, on peut obtenir en sortie du canon à électrons 11, un faisceau d'électrons avec une symétrie de révolution optimale autour de l'axe Z. Avantageusement, au cours d'un procédé de soudure, la tension électrique est inférieure ou égale à 80kV, de préférence inférieure ou égale à 60kV, voire même inférieure ou égale à 45kV. L'appareil à souder requiert donc une tension relativement faible comparativement aux autres appareils à souder par faisceau d'électrons de l'état de la technique. L'utilisation d'une tension électrique plus basse présente de nombreux avantages parmi lesquels une plus faible génération de rayons X, ce qui requiert donc des protections plus simples pour les opérateurs travaillant avec cet équipement de soudure 1. De plus, une plus faible tension, rend le faisceau d'électrons plus facile à dévier, ce qui permet d'envisager une miniaturisation des éléments constituant l'appareil à souder 10, notamment une miniaturisation du moyen de transformation 14 et du moyen de déviation 15. En variante, le faisceau d'électrons pourrait être généré différemment, par exemple au moyen d'une cathode plasma où les électrons sont extraits d'un plasma.

Le moyen de focalisation 12 est bien visible sur la figure 3. Il est apte à focaliser le faisceau d'électrons issu du canon à électrons 11 selon le premier axe Z. Plus particulièrement le moyen de focalisation est apte à transformer un faisceau d'électrons divergeant en amont en un faisceau d'électrons convergeant en aval, tout en conservant la symétrie de révolution du faisceau. Le moyen de focalisation peut notamment comprendre une bobine 121 agencé autour du premier axe Z. Une bobine est un solénoïde, ou autrement dit un ensemble de spires susceptible d'être parcouru par un courant électrique. La bobine 121 peut comprendre un noyau magnétique de forme annulaire ayant l'axe Z pour axe de révolution. Lorsqu'un courant électrique circule dans la bobine un champ magnétique apparait. A l'intérieur de la bobine, les lignes de champ peuvent être sensiblement orientées parallèlement à l'axe de la bobine, c'est-à-dire à l'axe Z. Sous l'effet de la force de Lorentz, le champ magnétique produit par la bobine exerce une force sur les électrons qui modifie leur trajectoire. Le champ magnétique généré par la bobine 121 peut ainsi focaliser le faisceau électrique vers un point de focalisation PF en aval du moyen de focalisation. Ce point de focalisation PF est notamment illustré sur la figure 2. Le point de focalisation est positionné sur l'axe Z. La distance du point de focalisation à la bobine 121 dépend notamment de la tension électrique U et du courant circulant dans la bobine 121. Le point de focalisation PF peut ainsi être ajusté et être positionné en amont du moyen de transformation 14 ou en aval du moyen de transformation 14 ou en toute position intermédiaire.

Le canon à électrons 11, le moyen de focalisation 12 (ainsi que le moyen de déflection 17 qui sera présenté ultérieurement) peuvent être regroupé dans un boîtier 4 (ou autrement dit un carter) solidaire du bâti 3. Ce boîtier 4 comprend une face de référence 5, sensiblement perpendiculaire à l'axe Z et depuis laquelle s'étend le bras 13.

Le bras 13 s'étend parallèlement au premier axe Z depuis la face de référence 5. Il comprend donc une première extrémité 131 fixée au boîtier 4 et une deuxième extrémité 132 libre. Par convention, "l'arrière" désigne le côté de la première extrémité et "l'avant" désigne le côté de la deuxième extrémité. Le bras 13 comprend une partie tubulaire 19 à l'intérieur de laquelle se propage le faisceau d'électrons. La partie tubulaire 19 sépare l'appareil à souder en deux parties. Une première partie hors du bras 13 et illustrée sur la figure 3, comprend notamment le canon à électrons 11 et le moyen de focalisation 12. Une deuxième partie, intégrée au bras 13 et illustrée sur la figure 4, comprend notamment le moyen de transformation 14 et le moyen de déviation 15.

Le bras 13 comprend globalement la forme d'un cylindre. Ce cylindre peut avoir un diamètre (indiqué par D1 sur la figure 1) inférieur ou égal à 80mm, notamment inférieur ou égal à 70mm, de préférence inférieur ou égal à 55mm.

On peut définir un repère orthogonal formé par le premier axe Z, un deuxième axe X et un troisième axe Y. Les axes X, Y, et Z sont donc perpendiculaires entre eux. L'axe X correspond à l'axe selon lequel les électrons sont projetés en sortie de l'appareil à souder. Le faisceau d'électrons subit donc une déviation à 90°. Cette déviation est réalisée par le moyen de déviation 15 qui sera détaillé par la suite. Par convention, les termes "amont" et "aval" sont définis dans ce document en suivant le sens de propagation des électrons, les électrons se propageant de l'amont vers l'aval.

On peut définir une longueur fonctionnelle L1 du bras suivant l'axe Z comme la distance entre la face de référence 5 et l'axe X suivant lequel le faisceau d'électrons est dévié par le moyen de déviation 15. La longueur fonctionnelle L1 peut être supérieure ou égale à 200mm, notamment supérieure ou égale à 400 mm, de préférence supérieure ou égale à 600mm, voire encore supérieure ou égale à 700mm. Le bras 13 est destiné à être introduit à l'intérieur de l'ensemble formé par les deux pièces de révolution 20A, 20B de manière à produire le cordon de soudure 22 selon un périmètre intérieur, à l'interface entre les deux pièces 20A, 20B.

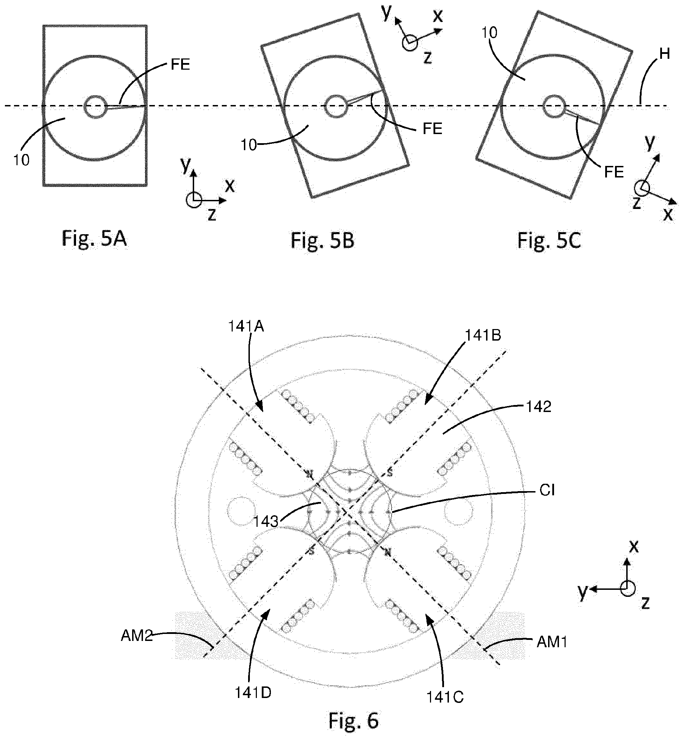

L'orientation de l'équipement de soudure peut être choisie de sorte que l'axe X soit un axe horizontal ou sensiblement horizontal. Toutefois, Comme cela est illustré sur les figures 5A, 5B et 5C, l'équipement de soudure peut avantageusement comprendre une liaison en rotation autour de l'axe Z entre l'appareil à souder et le bâti 3. Cette liaison en rotation permet de plus ou moins incliner l'axe X selon lequel le faisceau d'électrons sort de l'appareil à souder par rapport à l'horizontale. L'axe X selon lequel le faisceau d'électrons est émis de l'appareil à souder peut ainsi former un angle nul (comme illustré sur la figure 5A), un angle positif (comme illustré sur la figure 5B), ou encore un angle négatif (comme illustré sur la figure 5C) avec l'axe H représentant un axe horizontal. On peut ainsi, grâce à l'effet de la gravité sur le matériau en fusion, affiner l'aspect ou la qualité du cordon de soudure. Ainsi, on dispose d'un réglage supplémentaire pour empêcher ou minimiser la formation d'un relief en surface du cordon de soudure.

L'axe Z peut être horizontal ou vertical. Un positionnement horizontal de l'axe Z permet de limiter l'encombrement vertical de l'équipement de soudure 1, ce qui est particulièrement utile lorsque le bras 13 est long ou lorsqu'on cherche à souder un ensemble de pièces de révolution particulièrement long.

Le moyen de transformation 14 du faisceau d'électrons FE est apte à faire varier (ou autrement dit "modifier" ou "changer") la distribution de densité du faisceau d'électrons dans un plan perpendiculaire au premier axe Z. En particulier, le moyen de transformation 14 est apte à faire varier la distribution de densité du faisceau d'électrons selon le deuxième axe X et selon le troisième axe Y. Avec le moyen de transformation 14, la distribution de densité du faisceau peut être modifiée sur commande. Le faisceau peut être soit très intense soit plus étalé et de moindre densité énergétique. Chaque partie du faisceau peut subir une déviation angulaire différente selon l'axe X et/ou selon l'axe Y, ce qui peut conduire soit à une augmentation de la densité soit à une diminution de la densité du faisceau d'électrons. Une partie du faisceau pourra ainsi devenir convergente tandis qu'une autre partie du faisceau d'électrons pourra devenir divergente.

En variante le moyen de transformation 14 pourrait ne faire varier la distribution de densité du faisceau d'électrons que selon un seul de ces deux axes X ou Y, ou bien même selon un axe quelconque, perpendiculaire à l'axe Z, qui n'est pas nécessairement l'axe X ou l'axe Y. Le moyen de transformation 14 peut modifier la distribution de densité du faisceau sans dévier sa trajectoire globale. Ainsi, le faisceau demeure globalement orienté parallèlement à l'axe Z en aval comme en amont du moyen de transformation 14. Le moyen de transformation 14 n'est pas un simple masque qui bloquerait une partie du faisceau d'électrons et qui pourrait alors s'échauffer fortement. La puissance globale du faisceau d'électrons est sensiblement identique en amont et en aval du moyen de transformation.

La distribution de densité du faisceau d'électrons désigne non seulement la forme d'une section du faisceau dans un plan perpendiculaire à l'axe Z mais également la répartition des électrons à l'intérieur de cette forme. Par exemple, le moyen de transformation 14 peut modifier un faisceau d'électrons FE de section circulaire et avec une répartition uniforme des électrons traversant la section circulaire en un faisceau d'électrons de section ovoïde ou allongée avec également une répartition uniforme des électrons traversant la section ovoïde ou allongée. Selon un autre exemple, le moyen de transformation 14 peut modifier un faisceau d'électrons FE de section circulaire et avec une répartition uniforme des électrons traversant la section circulaire en un faisceau d'électrons de section également circulaire mais avec une répartition ou une distribution des électrons non uniforme (par exemple avec une proportion plus importante d'électrons traversant une première moitié de la section que d'électrons traversant la deuxième moitié, complémentaire de la première moitié). Le moyen de transformation peut modifier à la fois l'orientation des électrons composant le faisceau d'électrons, la forme de la section du faisceau d'électrons et la distribution des électrons à l'intérieur de cette section.

Le moyen de transformation 14 comprend au moins deux bobines, de préférence au moins quatre bobines, notamment au moins six bobines, voire même un nombre pair quelconque de bobines. Les bobines comprennent un axe magnétique sensiblement perpendiculaire à l'axe Z et sont réparties équitablement autour de l'axe Z de sorte à produire une alternance de pôles magnétiques Nord et de pôles magnétiques Sud. Les axes magnétiques des différentes bobines sont avantageusement compris dans un même plan perpendiculaire à l'axe Z. Le moyen de transformation comprend donc un nombre donné de paires de bobines. Les deux bobines d'une même paire sont positionnées l'une en face de l'autre, selon un axe perpendiculaire à l'axe Z. Les deux bobines d'une même paire ne sont donc pas positionnées l'une derrière l'autre suivant l'axe Z.

Selon le mode de réalisation illustré sur la figure 6, le moyen de transformation 14 est un quadrupôle. Il comprend quatre bobines 141A, 141B, 141C, 141D identiques et agencées globalement selon une symétrie de rotation à 90°. Les axes magnétiques des deux bobines 141A et 141C sont confondus en un même axe AM1. De même, les axes magnétiques des deux bobines 141B et 141D sont confondus en un même axe AM2, perpendiculaire à l'axe AM1. Le même courant électrique parcourt successivement les bobines 141A, 141B, 141C et 141D. Ces quatre bobines comprennent donc un unique fil électrique conduisant le courant successivement dans ces quatre bobines. Le sens d'enroulement de chaque bobine est défini de manière à produire une alternance de polarité Nord et Sud lorsqu'un courant circule dans le fil électrique. Les deux pôles magnétiques Nord (obtenus avec les bobines 141A et 141C) sont faces à faces et, de même, les deux pôles magnétiques Sud (obtenus avec les bobines 141B et 141D) sont faces à faces. Chaque bobine 141A, 141B, 141C, 141D comprend en outre un noyau magnétique 142 qui peut avoir au moins localement la forme d'un arc de cercle ou d'une hyperbole. Le noyau magnétique comprend un corps, par exemple de forme cylindrique ou profilée, agencé à l'intérieur de chaque bobine et une tête orientée vers l'intérieur du moyen de transformation. Un cercle inscrit CI peut être tracé en passant par le sommet de chaque tête des quatre noyaux magnétiques. Avantageusement, le rapport d'un rayon de courbure de la tête des noyaux magnétique sur le rayon du cercle inscrit CI peut être compris entre 1 et 1.3 inclus. Le noyau magnétique permet de guider les lignes de champ magnétique 143 produites par les quatre bobines 141A, 141B, 141C, 141D. Les lignes de champ magnétique 143 sont également représentées sur la figure 6. Elles se présentent sous la forme de lignes courbes avec une incidence perpendiculaire aux têtes des noyaux magnétiques. Les lignes de champ magnétiques partent depuis les deux têtes des noyaux magnétiques des pôles Nord et sont dirigées vers les deux têtes des noyaux magnétiques des pôles Sud. En remarque, l'axe AM1 ou l'axe AM2 peut être parallèle à l'axe X ou parallèle à l'axe Y, ou encore, comme cela est représenté sur la figure 6 former un angle sensiblement égal à 45° avec l'axe X et avec l'axe Y. En variante, les deux axes AM1 et AM2 pourraient ne pas être perpendiculaires.

L'utilisation d'un quadripôle permet de faire varier la distribution de densité du faisceau d'électrons selon deux axes distincts. En variante, si le moyen de transformation ne comprenait que deux pôles on pourrait tout de même faire varier la distribution de densité selon un axe perpendiculaire à l'axe Z. Selon une autre variante, le moyen de transformation pourrait être réalisé par une unique bobine dont l'axe serait parallèle à l'axe Z, le faisceau d'électrons passant au centre de cette unique bobine. Cette unique bobine agirait donc comme un second moyen de focalisation. Ce second moyen de focalisation serait donc logé à l'intérieur du bras (contrairement au moyen de focalisation 12). Une telle unique bobine permettrait également de faire varier la distribution de densité du faisceau d'électrons.

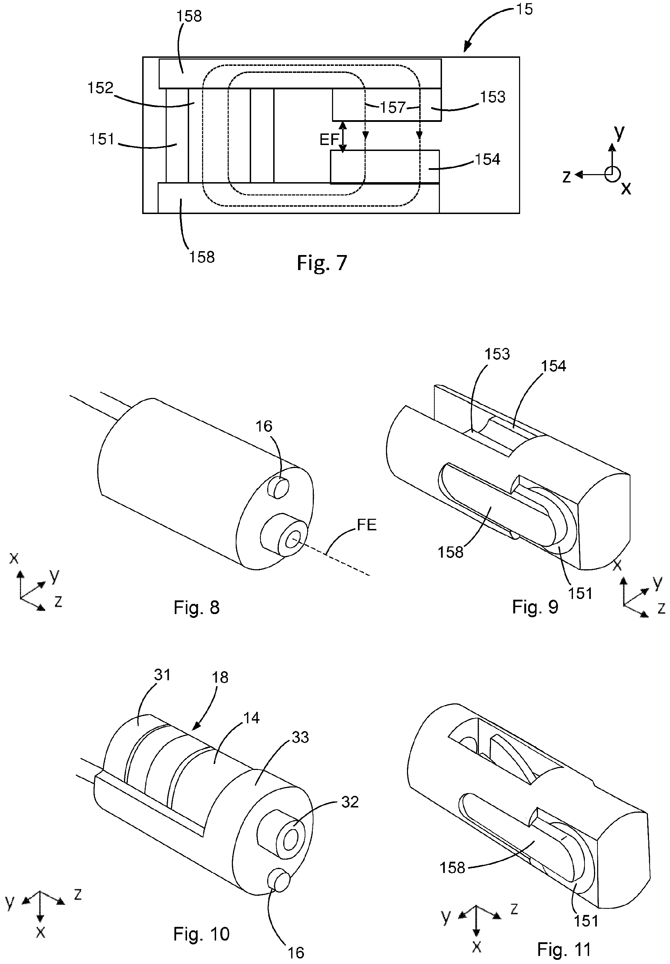

Le moyen de déviation 15 est notamment illustré sur la figure 7 et également visible partiellement sur les figures 8 à 11. Il est apte à dévier le faisceau d'électrons FE depuis une orientation parallèle à l'axe Z en amont du moyen de déviation vers une orientation parallèle à l'axe X en aval du moyen de déviation. Le faisceau d'électrons subit donc une déviation sensiblement égale à 90° entre l'amont et l'aval du moyen de déviation. Selon le mode de réalisation présenté, il comprend une unique bobine 151 dont l'axe magnétique est sensiblement parallèlement à l'axe Y. La bobine est donc apte à produire un champ magnétique orienté au moins localement parallèlement à l'axe Y lorsqu'elle est parcourue par un courant électrique. Ainsi, le moyen de déviation peut également être qualifié de dipôle. La bobine 151 est positionnée sensiblement à l'extrémité libre 131 du bras 13, dans le prolongement de la trajectoire du faisceau d'électrons suivant l'axe Z et derrière l'axe X. Autrement dit, la bobine 151 est positionnée dans le prolongement de l'axe Z, dans le demi espace défini par le plan perpendiculaire à l'axe Z contenant l'axe X, ce demi-espace comprenant l'extrémité libre 132 du bras 13. La bobine 151 n'est donc pas traversée par le faisceau d'électrons. Le courant traversant la bobine 151 peut être ajusté en fonction de la tension électrique U de manière à produire un angle de déviation égal ou sensiblement égal à 90°. Une déviation à 90° du faisceau d'électrons permet d'orienter le faisceau d'électrons selon une direction normale aux surfaces à souder. Une incidence normale du faisceau permet d'obtenir une zone d'impact de surface la plus faible possible. Toutefois, en contrôlant le courant circulant dans la bobine 151 on peut parvenir à faire varier l'angle de déviation autour de l'angle de 90°. On peut ainsi générer une oscillation ou une vibration du faisceau d'électrons de part et d'autre de l'interface 23 entre les deux pièces à souder. Une telle oscillation peut parfois être utile pour brasser le bain de la soudure et rendre plus homogène la partie fondue, ainsi que pour obtenir un état de surface du cordon de soudure le plus lisse possible.

Le moyen de déviation 15 comprend un noyau magnétique 152 agencé à l'intérieur de la bobine 151, une première plaque 153 métallique liée au noyau magnétique 152 et une deuxième plaque 154 métallique liée au noyau magnétique. Les deux plaques 153, 154 sont reliées au noyau magnétique 152 via deux flancs polaires 158. Ces flancs polaires 158 sont en contact à la fois avec le noyau magnétique 152 et avec les plaques 153, 154. Une ligne de champ 157 produite par la bobine 151 est notamment illustré sur la figure 7 : elle passe successivement par le noyau magnétique 152, un premier flanc polaire 158, la première plaque 153, l'entrefer EF, la deuxième plaque 154, et le deuxième flanc polaire 158. La première plaque 153 et la deuxième plaque 154 sont agencées symétriquement de part et d'autre du faisceau d'électrons FE, c'est-à-dire de part et d'autre de l'axe Z. Elles s'étendent toutes les deux dans un plan parallèle aux axes X et Z et sont espacées par un entrefer EF dans lequel passe le faisceau d'électrons. Elles sont positionnées devant la bobine 51 suivant l'axe Z. Les deux plaques 153, 154 ont une forme courbée en quart de cercle que l'on peut distinguer sur les figures 4, 9 et 11. Plus précisément ces plaques peuvent avoir la forme d'une portion d'un anneau mais en variante elles pourraient avoir une forme différente. Les deux plaques 153, 154 présentent chacune une face d'entrée 155 et une face de sortie 156. Les faces d'entrées sont les côtés des deux plaques 153, 154 qui font face au faisceau d'électrons incident. Les faces de sortie sont les côtés des deux plaques 153, 164 qui font face au faisceau d'électrons ressortant du moyen de déviation 15. Les faces d'entrées et de sorties peuvent être définies dans l'épaisseur des deux plaques 153, 154. Les faces d'entrées 155 des deux plaques forment avec l'axe X une angle A1. De préférence, l'angle A1 peut être compris entre 15° et 40° inclus, préférentiellement entre 25° et 35° inclus, voire même entre 28° et 33° inclus. Les faces de sortie 156 des deux plaques forment avec l'axe Z un angle A2. De préférence, l'angle A2 peut être compris entre 0° et 15° inclus, de préférence entre 5° et 12° inclus. Les valeurs des angles A1 et A2 jouent un rôle important dans la qualité de la déviation du faisceau d'électrons réalisée par le moyen de déviation 15. Ces valeurs d'angle A1 et A2 permettent d'obtenir une déviation sensiblement à 90° du faisceau d'électrons FE tout en minimisant les modifications de sa distribution de densité. Avec de telles valeurs d'angles A1 et A2, on obtient un bon compromis entre, d'une part une surface active des deux plaques 153, 154 suffisamment importante et, d'autre part un effet focalisant du champ magnétique lié aux effets de bord des deux plaques 153, 154 bien maîtrisé. La face d'entrée 155 et la face de sortie ont des dimensions suffisamment importantes pour que le faisceau d'électrons soit baigné dans un champ magnétique régulier et homogène. Les plaques 153, 154 sont disposées le long de la courbure que suit le faisceau d'électrons lorsqu'il est dévié par le moyen de déviation. Ces plaques 153, 154 permettent de guider et de concentrer le champ magnétique produit par la bobine 151 le long de la trajectoire suivie par le faisceau d'électrons. Avec cet agencement du moyen de déviation 15, le champ magnétique produit par la bobine 151 est efficacement concentré dans une zone utile pour dévier le faisceau d'électrons.

Selon une variante de réalisation non représentée, l'unique bobine 151 pourrait être remplacée par deux bobines distinctes, chacune de ces deux bobines étant accolée latéralement au deux plaques 153, 154. Toutefois, une telle réalisation pourrait conduire à des fuites de champ magnétique.

En référence aux figures 8 à 12, l'appareil à souder comprend également un vidéoscope 16, ou caméra, pour observer le lieu d'impact du faisceau d'électrons FE sur la pièce à souder. Le vidéoscope 16 permet notamment de contrôler l'aspect du cordon de soudure. Il peut être relié à un écran d'observation positionné en dehors de l'enceinte 2. Le vidéoscope s'étend à l'intérieur du bras 13 sensiblement le long d'un axe parallèle à l'axe Z, c'est-à-dire parallèlement au flux d'électrons FE avant qu'il parvienne au moyen de déviation 15. Il comprend une cellule optique 161 qui permet de capter des images suivant une direction parallèle à l'axe X et un moyen d'éclairage 162 pour observer la soudure dans les meilleures conditions d'éclairage possible.

Le vidéoscope est rétractable, ou autrement dit télescopique, parallèlement à l'axe Z. Lorsque le vidéoscope est en position de retrait, il occupe une position à l'arrière des deux plaques 153, 154 du moyen de déviation. Cette position est notamment illustrée sur la figure 4. Le vidéoscope se situe alors à l'intérieur d'un volume défini par la projection du moyen de déviation 15 selon l'axe Z. En effet, l'encombrement selon l'axe X du moyen de déviation 15 est plus important que l'encombrement selon ce même axe des autres éléments 14, 18, 31, 32, 33 qui équipent le bras 13. En particulier la bobine 151 ainsi que les deux plaques 153, 154 sont les éléments les plus volumineux du bras 13 et ils conditionnent la valeur du diamètre D1. En positionnant le vidéoscope le long des éléments 14, 18, 31, 32, 33, et derrière les deux plaques 153, 154, celui-ci s'intègre dans le bras 13 sans augmenter son diamètre. On remarque sur la figure 4 que l'axe selon lequel le faisceau d'électrons FE s'établit le long du bras 13 est décalé d'une valeur D2 par rapport à l'axe de révolution Z1 de l'enveloppe cylindrique du bras. Cet agencement permet de conserver un diamètre du bras D1 faible. Par conséquent, le bras 13 peut être introduit à l'intérieur de pièces de révolution dont le diamètre intérieur est faible. Quand le vidéoscope est en position de retrait, on évite qu'il soit atteint par des particules métalliques dégagées lors du procédé de soudure. Lorsqu'il est en position déployée, la cellule optique 161 coïncide avec une ouverture par laquelle le faisceau d'électron peut être émis hors de l'appareil à souder. Cette ouverture est aussi petite que possible de manière à ce que la pollution métallique dégagée par le procédé de soudure n'atteigne pas les pôles magnétiques ni le vidéoscope.

En variante, le vidéoscope pourrait ne pas être rétractable et dans ce cas, ce sont les pièces soudées l'une à l'autre qui pourrait être déplacées pour se trouver dans le champ de vision de la cellule optique 161. Cette variante demanderait néanmoins un cache ou un obturateur pour protéger le vidéoscope pendant la soudure. Selon une autre variante, le vidéoscope pourrait être positionné à l'extrémité avant du bras. Lorsque l'équipement de soudure est utilisé pour souder des cellules comprenant une ouverture dont le diamètre est tout juste supérieur au diamètre du bras, le vidéoscope pourrait être protégé en se positionnant au niveau de cette ouverture, voire même au-delà de cette ouverture, lorsque le faisceau d'électrons est actif. Dans cette configuration, il n'y aurait pas besoin d'un cache mobile spécifique pour protéger le vidéoscope.

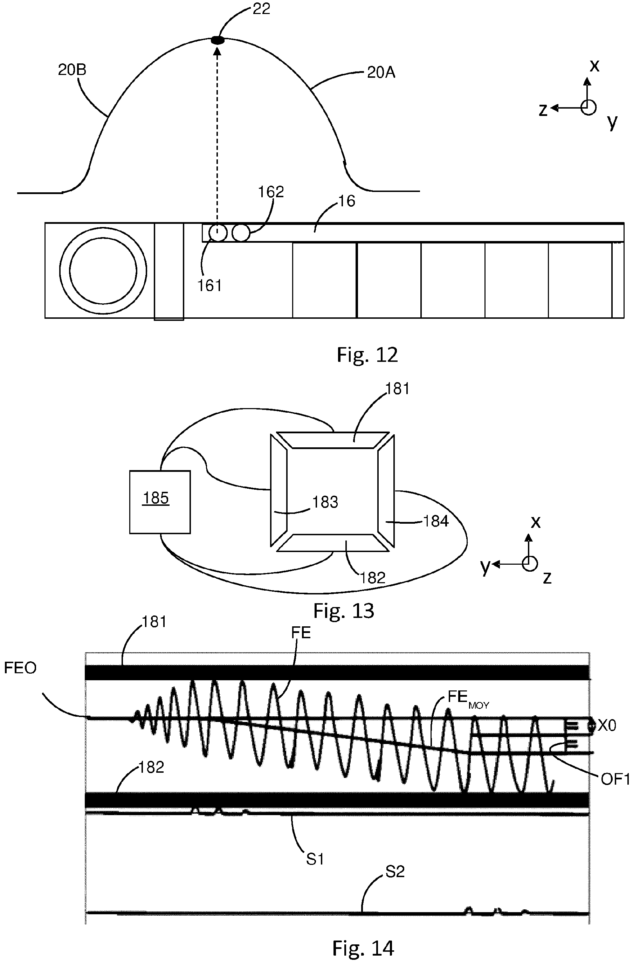

Lorsqu'on souhaite utiliser le vidéoscope pour observer la soudure, le vidéoscope se déploie vers l'avant entre la première plaque 153 et la deuxième plaque 154 comme cela est visible sur la figure 12. Le faisceau d'électrons est alors interrompu pour ne pas endommager le vidéoscope. Le vidéoscope permet d'observer le cordon de soudure 22 avec la même incidence que le faisceau d'électrons, c'est-à-dire avec une incidence normale au cordon de soudure et sans avoir à déplacer les pièces à souder. Le mouvement de translation vers l'avant et vers l'arrière du vidéoscope peut être obtenu par exemple avec un vérin et de manière automatique, sans qu'il soit nécessaire d'intervenir manuellement sur l'appareil à souder et donc sans défaire le vide régnant dans l'enceinte 2. En particulier, le mouvement de translation du vidéoscope peut être limité par un élément de butée, assurant ainsi un positionnement reproductible du vidéoscope et donc un réglage précis du faisceau sur l'interface à souder.

L'appareil à souder comprend par ailleurs un moyen de centrage du faisceau d'électrons. Le moyen de centrage permet notamment de centrer le faisceau d'électrons entre les deux plaques 153, 154 du moyen de déviation. A cet effet, le moyen de centrage comprend un moyen de déflection 17 du faisceau d'électrons et un moyen de détection 18 de la position du faisceau d'électrons. Le moyen de déflection 17 est positionné directement en aval du moyen de focalisation 12 tandis que le moyen de détection 18 est positionné en amont du moyen de transformation 14. Entre le moyen de déflection et le moyen de détection 18 se trouve la portion tubulaire 19, bien visible sur la figure 1, à l'intérieur de laquelle passe le faisceau d'électrons.

Le moyen de déflection 17 est apte à dévier le faisceau d'électrons d'un angle faible par rapport à l'axe Z (par exemple de l'ordre d'un ou de deux degrés), et avec une grande précision (par exemple de l'ordre de 0.01°) pour s'assurer que le faisceau d'électrons puisse passer au travers d'un trou de passage de faible diamètre (par exemple de 10mm de diamètre), à une distance élevée du moyen du moyen de focalisation (par exemple de l'ordre de 600mm). Selon le mode de réalisation présenté, le faisceau d'électrons peut être dévié suivant l'axe X et suivant l'axe Y. Le moyen de déflection comprend à cet effet deux bobines 171, 172 concentriques et agencées autour de l'axe Z. Ces deux bobines 171, 172 sont notamment visibles sur la figure 3. Une première bobine 171 est configurée pour dévier le faisceau d'électrons selon l'axe X et la deuxième bobine 172 est configurée pour dévier le faisceau d'électrons selon l'axe Y. La première bobine 171 est agencée de sorte à produire un champ magnétique parallèle à l'axe Y et la deuxième bobine 172 est agencée de sorte à produire un champ magnétique parallèle à l'axe X. En variante, ces deux bobines pourraient être agencées différemment. Notamment, la première bobine 171 pourrait être agencée de sorte à produire un champ magnétique parallèle à l'axe X et la deuxième bobine 172 pourrait être agencée de sorte à produire un champ magnétique parallèle à l'axe Y. En contrôlant le courant traversant la première bobine 171, on ajuste la déflection du faisceau d'électrons selon l'axe X et en contrôlant le courant traversant la deuxième bobine 172, on ajuste la déflection du faisceau d'électrons selon l'axe Y.

Le moyen de détection 18, représenté sur la figure 13, comprend quatre électrodes 181, 182, 183, 184 agencées aux quatre côtés d'un carré autour du canal de passage du faisceau d'électrons, c'est-à-dire autour de l'axe Z. Les quatre électrodes peuvent être sensiblement identiques les unes aux autres. Elles sont positionnées selon une symétrie de rotation à angle droit. La première électrode 181 et la deuxième électrode 182 comprennent un bord en vis-à-vis et parallèle à l'axe Y. De même, la troisième électrode 183 et la quatrième électrode 184 comprennent un bord en vis-à-vis et parallèle à l'axe X. En remarque, la disposition des quatre bords des électrodes pourrait s'écarter d'une forme carrée, par exemple suivre plutôt la forme d'un rectangle tout en restant dans le périmètre de l'invention. Chaque électrode est apte à détecter un contact avec le faisceau d'électrons. En particulier chaque électrode peut être reliée par une connexion électrique à une unité de contrôle électronique 185. Lorsque des électrons du faisceau d'électrons percutent une des électrodes, un signal est détecté par l'unité de contrôle électronique 185. Cette unité de contrôle électronique 185 est également reliée au moyen de déflection 17 et peut mettre en oeuvre un procédé de réglage ou de centrage du faisceau d'électrons qui sera détaillé par la suite. Les électrodes 181, 182, 183, 184 peuvent avoir une forme sensiblement trapézoïdale et être suffisamment massive pour supporter un contact avec le faisceau d'électrons, même à pleine puissance, sans générer un échauffement trop important. La masse des électrodes permet de réduire au maximum l'élévation de température et permet donc de préserver ces électrodes. La forme trapézoïdale permet d'utiliser le volume maximal disponible dans les limites de l'enveloppe cylindrique du bras 13. Avantageusement la grande base de la forme trapézoïdale pourrait même avoir une forme courbe épousant l'enveloppe cylindrique du bras. Les quatre électrodes peuvent être reliées à la masse au cours du procédé de soudage.

En variante, le moyen de déflection 17 pourrait être simplifié et n'être capable de dévier le faisceau d'électrons que suivant un seul axe perpendiculaire à l'axe Z. Le moyen de détection pourrait alors ne comprendre que deux électrodes agencées pour détecter une déflection du faisceau d'électrons. On parviendrait ainsi déjà à faire un réglage de la position selon un axe perpendiculaire à l'axe Z, par exemple selon l'axe X ou selon l'axe Y.

Selon une autre variante de réalisation, le moyen de déflection 17 pourrait être remplacé par une articulation, avantageusement motorisée, de l'ensemble formé par le canon à électrons 11 et le moyen de focalisation 12. On éviterait ainsi de dévier le faisceau d'électrons via le moyen de déflection 17. On éviterait par conséquent les aberrations ou distorsions du faisceau d'électrons occasionnées par sa déflection. Un tel montage pourrait donc permettre d'accroitre encore la précision du faisceau d'électrons mais la procédure de centrage serait moins rapide. Cette articulation pourrait se trouver sous la forme d'une platine montée en liaison glissière selon l'axe X et/ou selon l'axe Y, Une telle platine permettrait de translater le faisceau d'électron parallèlement à l'axe X et/ou à l'axe Y.

Le moyen de focalisation 12, le moyen de déflection 17, le moyen de détection 18, le moyen de transformation 14 et le moyen de déviation 15 sont des moyens distincts les uns des autres. Ils sont agencés dans l'ordre mentionné en suivant le parcours du faisceau d'électrons. Ces moyens sont centrés mécaniquement les uns par rapport aux autres, c'est-à-dire que les centres de ces différents éléments ou moyens sont alignés et confondus avec l'axe Z. En variante, certaines positions pourraient être interverties. Par exemple, le moyen de déflection 17 pourrait être positionné en amont du moyen de focalisation 12. Ou encore, le moyen de transformation 14 pourrait être positionné en amont du moyen de détection 18.

Comme illustré sur la figure 4, l'appareil à souder peut comprendre en outre différents éléments ou équipements interposés entre les moyens 12, 14, 15, 17 et 18. Parmi ces éléments ou équipements, l'appareil à souder comprend un diaphragme de protection 31. Le diaphragme de protection est un anneau massif comprenant une ouverture centrale laissant passer le faisceau d'électrons lorsqu'il est suffisamment bien centré. En cas de déviation accidentelle du faisceau d'électrons, par exemple à l'issue d'une fausse manipulation, le faisceau d'électrons percute la partie massive du diaphragme de protection prévue pour supporter des impacts de forte énergie. On évite ainsi que le faisceau d'électrons percute un élément plus sensible de l'appareil à souder. Avantageusement, le diaphragme de protection 31 est positionné devant le moyen de détection 18, juste après la portion tubulaire 19.

L'appareil à souder comprend également un élément bloqueur de champ magnétique 32 interposé entre le moyen de transformation 14 et le moyen de déviation 15. L'élément bloqueur de champ magnétique se présente également sous la forme d'une bague massive présentant une ouverture centrale au travers de laquelle passe le faisceau d'électrons. Les dimensions de cet éléments 32 sont déterminées pour isoler magnétiquement le moyen de transformation 14 du moyen de déviation 15. Ainsi le champ magnétique généré par les bobines du moyen de transformation n'affecte pas le fonctionnement du moyen de déviation et réciproquement. L'élément bloqueur de champ magnétique 32 est entouré par un corps en aluminium 33 refroidi par un système de refroidissement comprenant des canalisations. En option, un tel élément bloqueur de champ magnétique pourrait se trouver entre deux autre moyens quelconque de l'appareil à souder, par exemple entre le moyen de focalisation 12 et le moyen de déflection 17, voire ne pas être utilisé pour simplifier l'appareil à souder.

L'appareil à souder comprend encore un écran thermique refroidi par le système de refroidissement cet écran thermique est positionné devant la bobine 151 du moyen de déviation 15. Ainsi, si une partie des électrons du faisceau d'électrons n'est pas déviée à 90° par le moyen de déviation, cette partie percute l'écran thermique au lieu de percuter la bobine 151 positionnée derrière l'écran thermique.

L'appareil à souder comprend aussi un capot de protection (non représenté). Le capot de protection est positionné de sorte à récupérer les projections métalliques issues des pièces à souder. En effet, sous l'impact du faisceau d'électrons, des particules métalliques issues des pièces à souder peuvent s'évaporer puis se fixer sur l'appareil à souder ou sur d'autres parties des pièces à souder. Le capot de protection sert donc à empêcher ces projections de dégrader le moyen de déviation 15 ou les pièces à souder. Lorsqu'il est usé, le capot de protection peut facilement être remplacé sans avoir à changer le moyen de déviation. Avantageusement le capot de protection s'intègre dans le profil cylindrique du bras, à l'aplomb des deux plaques 153, 154 suivant l'axe X. Ainsi, l'intégration du capot de protection ne fait pas augmenter le diamètre du bras.

Nous allons à présent décrire un procédé de soudage de deux pièces de révolution selon un mode de réalisation de l'invention.

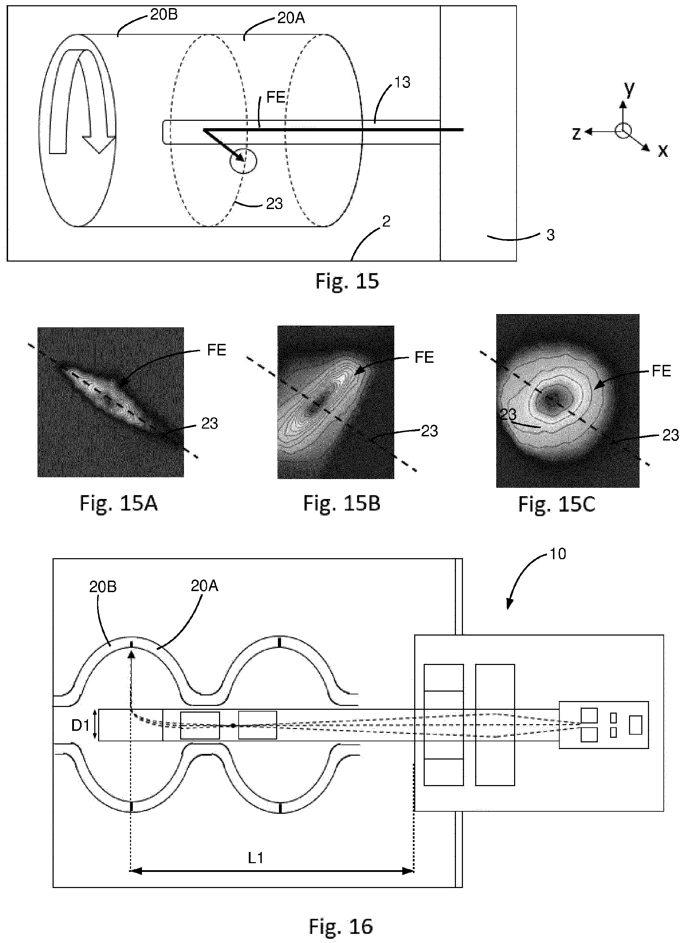

Préalablement, on positionne deux pièces 20A, 20B dans l'équipement de soudure de sorte à ce que l'interface 23 entre ces deux pièces soit en vis-à-vis de la sortie du faisceau d'électrons. Cette interface 23 correspond à un périmètre intérieur de l'ensemble formé par les deux pièces à souder. L'ensemble des deux pièces de révolution destinées à être soudées l'une à l'autre sont insérées autour du bras 13 de l'appareil à souder. Les deux pièces à souder peuvent être maintenue par un dispositif de préhension. Le dispositif de préhension comprend un moyen de liaison en rotation pour faire tourner l'ensemble des deux pièces à souder au cours du procédé de soudage. Le montage obtenu est illustré schématiquement sur la figure 15.

L'enceinte est ensuite refermée et le vide est fait dans l'enceinte. L'appareil à souder peut être mis sous tension de sorte à obtenir un faisceau d'électrons FE. A ce stade le faisceau d'électrons n'est pas nécessairement centré, c'est-à-dire que le centre du faisceau d'électrons peut ne pas passer par le centre du moyen de transformation 14.

Préalablement à l'opération de soudage proprement dite, le faisceau d'électrons peut être centré. Cette opération consiste à déterminer la position des bords du faisceau d'électrons et à en déduire une valeur de décalage du faisceau d'électrons en suivant plusieurs étapes.

Dans une première étape, on commande le moyen de déflection 17 de manière à obtenir une étape de déflection oscillante d'amplitude croissante du faisceau d'électrons selon l'axe X, par exemple une déflection sinusoïdale. A cet effet, un courant sinusoïdal d'amplitude croissante pourra circuler dans la première bobine 171. Le faisceau d'électrons oscille alors dans un premier plan, parallèle aux axes X et Z, autour de sa position d'origine FE0. Ce premier plan est délimité de part et d'autre par la première électrode 181 et la deuxième électrode 182.

Comme l'amplitude de déflection est croissante avec le temps, le faisceau d'électrons finit par toucher l'une des deux électrodes 181, 182, par exemple la première électrode 181. Dans une deuxième étape, le contact du faisceau d'électrons sur l'électrode 181 est détecté par le moyen de contrôle électronique 185. L'amplitude de déflection est alors figée à la valeur atteinte au moment du contact du faisceau d'électrons sur la première électrode 181.

Dans une troisième étape, on poursuit la déflection sinusoïdale du faisceau d'électrons selon l'axe X mais en conservant toujours une amplitude de déflection constante, celle qui a été figée à l'étape précédente. Le faisceau d'électrons oscille toujours dans le premier plan. On applique alors un premier offset croissant avec le temps sur le faisceau d'électrons pour le décaler progressivement vers l'électrode opposée à celle qui a été touchée par le faisceau d'électrons, c'est-à-dire la deuxième électrode 182 dans cet exemple.

Comme le faisceau d'électrons est progressivement décalé vers la deuxième électrode 182, le faisceau d'électrons finit par toucher cette deuxième électrode 182 avec la même amplitude que lors du contact sur la première électrode 181. Dans une quatrième étape, le contact du faisceau d'électrons sur l'électrode 182 est détecté par le moyen de contrôle électronique 185. La valeur de l'offset OF1 appliqué sur le faisceau d'électrons est alors relevée.

Dans une cinquième étape, on procède au centrage du faisceau d'électrons proprement dit. En partant de la position initiale du faisceau FE0, on applique sur celui-ci un décalage correspondant à la valeur de l'offset OF1 précédemment relevée divisée par deux. On obtient ainsi un faisceau d'électrons centré selon l'axe X entre les deux électrodes 181 et 182.

La figure 14 permet également de bien visualiser le procédé de centrage. Sur le graphique supérieur de la figure 14, on observe la position du faisceau d'électrons FE relativement à l'axe X en fonction du temps. Les deux électrodes 181 et 182 sont schématisées par des bandes sombres en haut et en bas du graphique. Dans cet exemple on constate que la position initiale FE0 du faisceau d'électrons est légèrement décalée vers l'électrode 181. La courbe FEmoy représente la position moyenne du faisceau d'électrons relativement à l'axe X autour de laquelle la déflection sinusoïdale est appliquée. OF1 désigne la valeur de l'offset relevée au cours de la quatrième étape. X0 désigne le décalage suivant l'axe X qui sera appliqué sur le faisceau d'électrons pour le centrer entre les deux électrodes 181 et 182. On a donc X0 = OF1 / 2. En pratique, ce décalage pourra être obtenu en faisant circuler un courant de valeur constante dans la première bobine 171. Sur la figure 14, le graphique inférieur montre les signaux S1 et S2 détectés par le moyen de contrôle électronique 185 lorsque le faisceau entre en contact avec l'électrode 181 puis avec l'électrode 182.

Ensuite, on procède de la même façon pour centrer le faisceau relativement à l'axe Y, le faisceau d'électrons oscillant alors entre les électrodes 183 et 184. Le centrage du faisceau d'électrons selon l'axe Y peut affecter le centrage selon l'axe X réalisé auparavant, notamment en cas de défaut d'équerrage des bobines 171, 172 du moyen de déflection. Avantageusement, le centrage selon l'axe X et selon l'axe Y pourra être répété une deuxième fois, voire même un nombre de fois plus important afin de centrer le faisceau d'électrons par itérations successives. Ce procédé de centrage est complètement automatique et ne requiert pas d'intervenir manuellement sur l'appareil à souder, ni de défaire le vide régnant dans l'enceinte 2. Il peut même être répété à l'issue d'une étape de soudure pour s'assurer que le faisceau n'a pas été décentré. L'opération de centrage du faisceau d'électrons peut être réalisée à basse puissance si bien que le faisceau d'électrons ne risque pas d'abîmer ou de marquer les deux pièces à souder. Optionnellement un cache pourrait être utilisé pour éviter que le faisceau d'électrons parvienne jusqu'aux pièces à souder lors du procédé de centrage qui vient d'être décrit. En variante, l'amplitude de déflection du faisceau d'électrons pourrait osciller non pas suivant une forme de sinusoïde mais selon une forme triangulaire, une forme en créneau, ou encore toute autre forme d'alternance produisant un motif symétrique. Optionnellement, le centrage pourrait également être réalisé en utilisant une cible martyr à la place des pièces à souder. En remarque, un offset ou décentrage volontaire peut également être appliqué pour décaler volontairement le faisceau d'électrons mais de manière contrôlée et reproductible.

Une fois le faisceau d'électrons centré, on procède à une étape de calibration du moyen de transformation pour produire un faisceau d'électrons comprenant une distribution de densité prédéfinie en sortie de l'appareil à souder. En effet, des distributions de densité particulières peuvent être souhaitées pour réaliser différentes étapes de soudure. La distribution de densité peut être ajustée grâce au moyen de transformation 14 mais également grâce au moyen de focalisation 12. En ajustant les courants parcourant les bobines respectives de ces deux moyens 12, 14, on parvient à modifier la distribution de densité du faisceau. Lorsque le point de focalisation PF se situe en amont du moyen de transformation, le faisceau d'électrons incident dans le moyen de transformation 14 est divergeant, les variations de courants au travers des bobines 141A, 141B, 141C et 141D produisent une première modification géométrique de la distribution de densité du faisceau d'électrons. Lorsque le point de focalisation PF se situe en aval du moyen de transformation, le faisceau d'électrons incident dans le moyen de transformation 14 est convergeant, les variations de courants au travers des bobines 141A, 141B, 141C et 141D produisent une deuxième modification géométrique de la distribution de densité du faisceau d'électrons, différente de la première modification géométrique. Le courant circulant dans la bobine 121 et le courant circulant dans les quatre bobines 141A, 141B, 141C et 141D constituent donc deux paramètres de réglage sur lequel un opérateur peut s'appuyer pour réaliser des distributions de densité variées. Les distributions de densité obtenues peuvent avoir une symétrie de révolution ou être plus ou moins allongées parallèlement à l'interface 23 ou perpendiculairement à l'interface 23.

En aval du moyen de transformation 14, la distribution de densité peut ainsi avoir une forme circulaire mais également une forme ovoïde allongée selon l'axe Z ou allongée selon l'axe Y ou encore allongée selon tout axe perpendiculaire à l'axe X. Cependant, le moyen de déviation 15 perturbe la distribution de densité du faisceau d'électrons obtenue directement en sortie du moyen de transformation 14. En effet, la déviation à 90° du faisceau d'électrons par le moyen de déviation provoque inexorablement une modification de la distribution de densité du faisceau d'électrons. Il est donc nécessaire d'anticiper au niveau du moyen de transformation 14 les déformations produites par le moyen de déviation 15 pour parvenir à obtenir une distribution de densité prédéfinie en sortie de l'appareil à souder.

Les figures 15A, 15B et 15C illustrent différentes formes de projection du faisceau d'électrons sur les deux pièces à souder. Ces représentations sont issues de résultats d'essais de l'appareil à souder 10. Elles peuvent notamment être obtenues avec un analyseur de faisceau d'électrons.

Comme illustré sur la figure 15A, l'étape de calibration peut être définie de sorte à produire un faisceau d'électrons dont la densité est distribuée parallèlement à l'interface entre les deux pièces de révolution. Cette forme est particulièrement adaptée pour réaliser l'opération de soudure proprement dite. En effet, une densité d'énergie trop importante pourrait conduire à une soudure avec projection de matière, ce qui est préjudiciable pour la qualité de la pièce finie. En produisant un faisceau qui est plus étalé le long de la ligne de jointure entre les deux pièces à souder, la densité d'énergie peut être réduite sans élargir la zone affectée thermiquement. Le faisceau d'électrons peut alors faire fondre le métal, en l'espèce le niobium, de part et d'autre de la ligne de jonction entre les deux pièces de révolution. La largeur du cordon de soudure ainsi obtenu peut être très faible. La soudure est réalisé par l'effet trou de serrure. C'est-à-dire que la puissance envoyée est telle que de la matière est évaporée à l'interface entre les deux pièces à souder et un trou de la profondeur désirée est créé. Ce trou (de serrure) est ensuite déplacé (ou autrement dit "tiré") sur la pièce par la rotation de l'ensemble formé par les deux pièces à souder. Au niveau du trou, le matériau formant les deux pièces à souder est fondu ce qui forme un bain liquide. Ce bain se solidifie lorsque le faisceau d'électrons s'écarte de cette zone, c'est pourquoi ce bain a grossièrement une forme en trou de serrure. Pour réaliser la fin du cordon de soudure, une baisse de la puissance et/ou une modification de la focalisation du faisceau d'électrons permettent de faire remonter le trou à la surface (c'est-à-dire diminuer progressivement la profondeur du trou) des deux pièces soudées l'une à l'autre et d'obtenir un cordon lisse.

Le faisceau d'électrons peut faire fondre le métal sur une profondeur par exemple de l'ordre de 2mm à 3mm, voire même sur une profondeur plus importante encore. Selon un premier réglage possible de l'appareil à souder, le métal pourrait être fondu sur toute l'épaisseur des deux pièces à souder. Selon un autre réglage de l'appareil à souder, le faisceau d'électrons ne traverse pas complètement l'épaisseur des deux pièces à souder. Ainsi, le métal n'est pas fondu sur toute l'épaisseur des deux pièces à souder. En minimisant la quantité d'énergie transmise dans les matériaux formant les pièces à souder, on limite la taille de la zone fondue ou zone affectée thermiquement et les tensions résiduelles. On minimise ainsi les déformations du cordon de soudure. Ultérieurement, une opération de lissage (par exemple par projection d'un faisceau d'électrons) sur l'extérieur de l'interface entre les deux pièces à souder peut permettre d'équilibrer les tensions au sein du cordon de soudure entre son côté intérieur et son côté extérieur.

Pour souder les deux pièces de révolution ensemble on fait tourner la pièce sur elle-même autour de l'axe Z. A cet effet, l'équipement de soudure peut avantageusement comprendre un moteur relié à un moyen de préhension des pièces à souder, comme par exemple un mandrin. L'appareil à souder reste immobile au cours de la soudure. La vitesse de rotation de l'ensemble formé par les deux pièces à souder peut être ajustée en fonction notamment de la puissance du faisceau d'électrons et de la nature des pièces à souder.

En remarque, on peut ajuster la position du point de focalisation PF pour obtenir une focalisation du faisceau d'électrons plus ou moins lointaine après déflection. Ceci peut notamment être utile pour souder deux pièces dont l'interface n'est pas un cercle centré sur l'axe Z sans avoir à déplacer les deux pièces à souder par rapport à l'équipement de soudure.

En référence à la figure 15B, l'étape de calibration peut également être définie pour produire un faisceau d'électrons dont la densité est distribuée perpendiculairement à l'interface formée entre les deux pièces de révolution. Cette forme de faisceau est particulièrement avantageuse pour lisser un cordon de soudure préalablement formé entre les deux pièces.

En référence à la figure 15C, l'étape de calibration peut aussi être définie pour produire un faisceau d'électrons dont la densité est distribuée de manière circulaire et uniforme. On peut notamment obtenir un faisceau d'électrons extrêmement concentré permettant d'atteindre des puissances par unité de surface extrêmement élevées. Par exemple, avec une tension électrique U entre l'anode et la cathode égale à 55kV et avec un courant circulant de l'anode à la cathode égale à 50mA, on peut obtenir grâce à l'invention un faisceau d'électrons atteignant 4100 W/mm2. Une distribution de densité circulaire, ou ponctuelle, peut être particulièrement utile pour procéder à un traitement local d'une pièce, comme par exemple la réparation d'un défaut tel qu'un trou, un manque de matière, ou des irrégularités de surface. La puissance du faisceau d'électrons pourra alors être éventuellement abaissée pour éviter les projections de matière. D'une manière générale, la distribution de densité du faisceau d'électrons est adaptée aux effets désirés pour la réalisation du cordon de soudure.

Comme illustré sur la figure 16, la grande longueur L1 du bras 13 permet d'envisager de souder un ensemble de cellules l'une à l'autre en limitant le nombre de manipulations et en évitant de défaire le vide régnant dans l'enceinte. Pour ce faire, les cellules peuvent être préalablement positionnées l'une contre l'autre et maintenues en position par un outillage spécifique. Ensuite, l'appareil à souder peut souder successivement les interfaces entre deux cellules adjacentes. L'ensemble de cellules est translaté suivant l'axe Z entre chaque opération de soudure de manière à souder l'ensemble des interfaces entre les cellules. Avantageusement, un chariot coulissant logé à l'intérieur de l'enceinte permet de déplacer automatiquement l'ensemble de cellules. Comme le bras 13 peut être inséré d'un côté ou de l'autre de l'ensemble des cellules à souder, on parvient à souder un ensemble de cellules dont la longueur totale atteint la longueur du bras 13 multipliée par deux. Le poste de soudure peut également être équipé d'un dispositif de retournement apte à faire pivoter l'ensemble des cellules de 180° de sorte à insérer le bras 13 successivement par les deux ouvertures opposées de l'ensemble des cellules. En variante, si le poste de soudure est dépourvu de dispositif de retournement, le pivotement de 180° de l'ensemble des cellules peut être réalisé manuellement en défaisant le vide dans l'enceinte. Ainsi, seulement une interruption du vide régnant dans l'enceinte serait nécessaire pour souder l'ensemble des cavités. L'utilisation de l'équipement de soudure selon l'invention permet donc d'éviter une interruption trop fréquente du vide dans l'enceinte. Notamment, une interruption n'est pas nécessaire pour souder chaque cellule ou sous-ensemble de cellules.

Comme le faisceau d'électrons est guidé précisément à l'intérieur du bras jusqu'au moyen de déflection, il est possible d'envisager des bras de longueur plus importante que les appareils à souder de l'état de la technique. Cette longueur plus importante peut permettre de positionner quatre cellules et même plus de quatre cellules autour du bras 13, ainsi que des éléments de tube et/ou des flasques associés aux cellules. Ainsi, on facilite le procédé d'assemblage. De plus, avec un bras 13 aussi long, on peut atteindre avec le faisceau d'électrons n'importe quel point de l'intérieur d'une cavité formée par un ensemble de plusieurs cellules déjà assemblées. Par exemple, on peut atteindre n'importe quel point d'un ensemble de neuf cellules déjà assemblées entre elles. Ceci est particulièrement utile pour réparer un défaut détecté après l'assemblage des cellules.

Grâce à l'invention, on peut donc souder un ensemble de cellules dont la longueur est de 1200mm, voire 1300mm, voire même une longueur plus importante encore avec un minimum de manipulations et avec un très haut niveau de qualité du cordon de soudure.

## Revendications

1. Appareil à souder (10) par faisceau d'électrons, comprenant:
• un canon à électrons (11) apte à générer un faisceau d'électrons (FE),
• un moyen de focalisation (12) apte à orienter le faisceau d'électrons selon un premier axe (Z),
et **caractérisé en ce qu'**il comprend:
• un bras (13) s'étendant parallèlement au premier axe, le bras comprenant :
- un moyen de transformation (14) d'une distribution de densité du faisceau d'électrons dans un plan perpendiculaire au premier axe (Z), et
- un moyen de déviation (15) du faisceau d'électrons selon un deuxième axe (X) sensiblement perpendiculaire au premier axe.

2. Appareil à souder (10) selon la revendication précédente, **caractérisé en ce que** le moyen de transformation (14) comprend au moins deux bobines, de préférence au moins quatre bobines (141A, 141B, 141C, 141D), notamment au moins six bobines, les au moins deux bobines formant un axe magnétique (AM1, AM2) sensiblement perpendiculaire audit premier axe (Z), les au moins deux bobines étant réparties autour dudit premier axe de sorte à produire une alternance de pôles magnétiques Nord et de pôles magnétiques Sud.

3. Appareil à souder (10) selon l'une des revendications précédentes, **caractérisé en ce que** le canon à électrons (11), le moyen de focalisation (12), le moyen de transformation (14) et le moyen de déviation (15) sont agencés dans cet ordre en suivant le parcours du faisceau d'électrons (FE), le moyen de focalisation comprenant une distance focale variable, le moyen de focalisation étant apte à focaliser le faisceau d'électrons en un point de focalisation (PF) positionné en amont du moyen de transformation et le moyen de focalisation étant apte à focaliser le faisceau d'électrons en un point de focalisation (PF) positionné en aval du moyen de transformation.

4. Appareil à souder (10) selon l'une des revendications précédentes, **caractérisé en ce que** le moyen de déviation (15) comprend une bobine (151) apte à produire un champ magnétique orienté sensiblement perpendiculairement audit premier axe (Z) lorsque ladite bobine est parcourue par un courant électrique, ladite bobine étant positionnée sensiblement dans le prolongement du premier axe (Z), derrière ledit deuxième axe (X).

5. Appareil à souder (10) selon la revendication précédente, **caractérisé en ce que** le moyen de déviation (15) comprend un noyau magnétique (152) agencé à l'intérieur de ladite bobine (151), une première plaque (153) métallique liée au noyau magnétique par un premier flanc polaire (158), une deuxième plaque (154) métallique liée au noyau magnétique par un deuxième flanc polaire (158), la première plaque et la deuxième plaque étant agencées symétriquement de part et d'autre dudit premier axe (Z), la première plaque et la deuxième plaque comprenant chacune une face d'entrée (155) et une face de sortie (156), la face d'entrée formant avec ledit deuxième axe (X) un angle (A1) compris entre 15° et 40° inclus, la face de sortie formant avec ledit premier axe (Z) un angle (A2) compris entre 0° et 15° inclus..

6. Appareil à souder (10) selon l'une des revendications précédentes, **caractérisé en ce qu'**il comprend un vidéoscope (16) pour observer un impact du faisceau d'électrons, le vidéoscope s'étendant sensiblement le long d'un axe parallèle audit premier axe (Z), le vidéoscope étant positionné à l'arrière du moyen de déviation (15) à l'intérieur d'un volume défini par la projection du moyen de déviation selon ledit premier axe.

7. Appareil à souder (10) selon la revendication 5 et selon la revendication 6, **caractérisé en ce que** le vidéoscope (16) est rétractable parallèlement au premier axe (Z), et **en ce qu'**il est apte à s'étendre entre la première plaque (153) et la deuxième plaque (154).

8. Appareil à souder (10) selon l'une des revendications précédentes, **caractérisé en ce qu'**il comprend un diaphragme de protection (31) pour protéger un élément (18) de l'appareil à souder du faisceau d'électrons (FE) en cas de déviation accidentelle du faisceau d'électrons,
et/ou,
**en ce qu'**il comprend un élément bloqueur de champ magnétique (32) interposé entre le moyen de transformation (14) et le moyen de déviation (15),
et/ou,
**en ce qu'**il comprend un écran thermique, notamment un écran thermique refroidi par un système de refroidissement,
et/ou,
**en ce qu'**il comprend un capot de protection positionné de sorte à protéger une pièce à souder et/ou un élément de l'appareil à souder de projections métalliques issues d'une pièce à souder.

9. Appareil à souder (10) selon l'une des revendications précédentes, **caractérisé en ce que** le bras (13) comprend globalement la forme d'un cylindre,
ledit cylindre comprenant un axe de révolution (Z1) décalé d'une valeur (D2) non nulle par rapport audit premier axe,
et/ou
ledit cylindre comprenant un diamètre (D1) inférieur ou égal à 80mm, notamment inférieur ou égal à 70mm, de préférence inférieur ou égal à 60mm,
et/ou
ledit cylindre comprenant une longueur (L1) suivant ledit premier axe (Z) supérieure ou égale à 200mm, notamment supérieure ou égale à 400 mm, de préférence supérieure ou égale à 600mm.

10. Appareil à souder (10) selon l'une des revendications précédentes, **caractérisé en ce qu'**il comprend :
- un moyen de déflection (17) du faisceau d'électrons (FE), et
- un moyen de détection (18) de la position du faisceau d'électrons, le moyen de détection comprenant deux électrodes (181, 183) agencées de part et d'autre du premier axe (Z), chaque électrode étant apte à détecter un contact avec le faisceau d'électrons.

11. Appareil à souder (10) selon l'une des revendications 1 à 9, **caractérisé en ce qu'**il comprend :
- un moyen de déflection (17) du faisceau d'électrons (FE), et
- un moyen de détection (18) de la position du faisceau d'électrons, le moyen de détection comprenant quatre électrodes (181, 182, 183, 184) agencées aux quatre côtés d'un carré autour du premier axe (Z), chaque électrode étant apte à détecter un contact avec le faisceau d'électrons.

12. Équipement de soudure (1), **caractérisé en ce qu'**il comprend un bâti (3) destiné à reposer sur un sol et un appareil à souder (10) selon l'une des revendications précédentes, l'appareil à souder étant mobile en rotation autour dudit premier axe (Z) par rapport au bâti (3).

13. Procédé de soudage de deux pièces (20A, 20B) comprenant une ouverture centrale, par un faisceau d'électrons (FE) généré par un appareil à souder (10) selon l'une des revendications 1 à 11 ou par un équipement de soudure (1) selon la revendication 12, **caractérisé en ce qu'**il comprend :
- une étape de positionnement des deux pièces destinées à être soudées l'une à l'autre autour du bras (13) de l'appareil à souder,
- une étape de calibration du moyen de transformation (14) pour produire un faisceau d'électrons comprenant une distribution de densité prédéfinie en sortie de l'appareil à souder,
- une étape de projection d'un faisceau d'électrons sur une interface formée entre les deux pièces.

14. Procédé de soudage selon la revendication précédente, **caractérisé en ce que** l'étape de calibration est définie pour produire un faisceau d'électrons (FE) dont la densité est distribuée soit parallèlement à une interface (23) formée entre les deux pièces (20A, 20B), soit perpendiculairement à une interface (23) formée entre les deux pièces (20A, 20B), soit de manière circulaire et uniforme, soit selon toute forme intermédiaire entre une distribution parallèle à l'interface et une distribution circulaire et uniforme, soit selon toute forme intermédiaire entre une distribution perpendiculaire à l'interface et une distribution circulaire et uniforme, et **en ce que** l'étape de projection est une étape de soudure des deux pièces, notamment une soudure de type trou de serrure, ou une étape de lissage d'une soudure (22), ou une étape de réparation locale d'une soudure (22), notamment une étape de traitement de fin de cordon d'une soudure (22).

15. Procédé de soudage selon l'une des revendications 13 ou 14, **caractérisé en ce que** l'étape de calibration est définie pour produire un faisceau d'électrons dont la densité est distribuée perpendiculairement à une interface (23) formée entre les deux pièces (20A, 20B), et **en ce que** l'étape de projection est une étape de lissage d'une soudure préalablement formée entre les deux pièces.

16. Procédé de soudage selon l'une des revendications 13 à 15, **caractérisé en ce que** l'étape de calibration est définie pour produire un faisceau d'électrons dont la densité est distribuée de manière circulaire et uniforme, et **en ce que** l'étape de projection est une étape de réparation locale d'une soudure ou une étape de traitement de fin de cordon d'une soudure (22), notamment la puissance du faisceau d'électrons étant progressivement réduite jusqu'à zéro lorsque le faisceau d'électrons atteint la fin du cordon de soudure.

17. Procédé de soudage selon l'une des revendication 13 à 16, **caractérisé en ce que** le canon à électrons comprend une anode et une cathode, une tension électrique (U) entre l'anode et la cathode étant inférieure ou égale à 60kV, notamment inférieure ou égale à 45kV lors de l'étape de projection.

18. Procédé de réglage d'un appareil à souder selon la revendication 10, **caractérisé en ce qu'**il comprend :
- une étape de déflection oscillante du faisceau d'électrons, le faisceau d'électrons oscillant dans un premier plan défini entre une première électrode (181) et une deuxième électrode (182) du moyen de détection (18), la deuxième électrode étant opposée à la première électrode par rapport au faisceau d'électrons (FE), l'amplitude de l'oscillation étant croissante avec le temps, puis
- une étape de détection d'un contact du faisceau d'électrons sur une électrode parmi la première électrode et la deuxième électrode, puis
- une étape de déflection oscillante du faisceau d'électrons, le faisceau d'électrons oscillant dans le premier plan, l'amplitude de la sinusoïde étant maintenue à la valeur atteinte au moment du contact du faisceau d'électrons sur ladite électrode, un premier offset croissant avec le temps étant appliqué sur le faisceau d'électrons pour le décaler progressivement vers l'autre électrode parmi la première électrode et la deuxième électrode, puis
- une étape de détection d'un contact du faisceau d'électrons sur ladite autre électrode, puis
- une étape de centrage du faisceau d'électrons en décalant le faisceau d'électrons vers ladite autre électrode d'une valeur égale au premier offset (OF1) appliqué sur le faisceau d'électrons au moment de son contact avec ladite autre électrode divisé par deux.

19. Procédé de réglage d'un appareil à souder selon la revendication 11, **caractérisé en ce qu'**il comprend la mise en oeuvre du procédé de réglage selon la revendication précédente, puis
- une étape de déflection oscillante du faisceau d'électrons, le faisceau d'électrons oscillant dans un deuxième plan défini entre une troisième électrode (183) et une quatrième électrode (184) du moyen de détection, la quatrième électrode étant opposée à la troisième électrode par rapport au faisceau d'électrons, le deuxième plan étant perpendiculaire au premier plan, l'amplitude de l'oscillation étant croissante avec le temps, puis
- une étape de détection d'un contact du faisceau d'électrons sur une électrode parmi la troisième électrode et la quatrième électrode, puis
- une étape de déflection oscillante du faisceau d'électrons, le faisceau d'électrons oscillant dans le deuxième plan, l'amplitude de l'oscillation étant maintenue à la valeur atteinte au moment du contact du faisceau d'électrons sur ladite électrode, un deuxième offset croissant avec le temps étant appliqué sur le faisceau d'électrons pour le décaler progressivement vers l'autre électrode parmi la troisième électrode et la quatrième électrode, puis
- une étape de détection d'un contact du faisceau d'électrons sur ladite autre électrode, puis
- une étape de centrage du faisceau d'électrons en décalant le faisceau d'électrons vers ladite autre électrode d'une valeur égale à le deuxième offset appliqué sur le faisceau d'électrons au moment de son contact avec ladite autre électrode divisé par deux.

## Patentansprüche

1. Elektronenstrahlschweißgerät (10), umfassend:
• eine Elektronenkanone (11), die geeignet ist, einen Elektronenstrahl (FE) zu generieren,
• ein Fokussierungsmittel (12), das geeignet ist, den Elektronenstrahl entlang einer ersten Achse (Z) auszurichten,
und **dadurch gekennzeichnet, dass** es umfasst:
• einen Arm (13), der sich parallel zu der ersten Achse erstreckt, wobei der Arm umfasst:
- ein Transformationsmittel (14) zum Transformieren einer Dichteverteilung des Elektronenstrahls in einer senkrecht zu der ersten Achse (Z) verlaufenden Ebene und
- ein Umlenkmittel (15) zum Umlenken des Elektronenstrahls entlang einer zweiten Achse (X), die im Wesentlichen senkrecht zu der ersten Achse verläuft.

2. Schweißgerät (10) nach dem vorhergehenden Anspruch, **dadurch gekennzeichnet, dass** das Transformationsmittel (14) mindestens zwei Spulen, bevorzugt mindestens vier Spulen (141A, 141B, 141C, 141D), insbesondere mindestens sechs Spulen umfasst, wobei die mindestens zwei Spulen eine magnetische Achse (AM1, AM2) bilden, die im Wesentlichen senkrecht zu der ersten Achse (Z) verläuft, wobei die mindestens zwei Spulen um die erste Achse herum so verteilt sind, dass sie eine Wechselfolge aus Nord-Magnetpolen und aus Süd-Magnetpolen erzeugen.

3. Schweißgerät (10) nach einem der vorhergehenden Ansprüche, **dadurch gekennzeichnet, dass** die Elektronenkanone (11), das Fokussierungsmittel (12), das Transformationsmittel (14) und das Umlenkmittel (15) in dieser Reihenfolge entlang der Bahn des Elektronenstrahls (FE) angeordnet sind, wobei das Fokussierungsmittel eine variable Brennweite umfasst, wobei das Fokussierungsmittel geeignet ist, den Elektronenstrahl in einem Brennpunkt (PF) zu fokussieren, der dem Fokussierungsmittel vorgelagert positioniert ist, und wobei das Fokussierungsmittel geeignet ist, den Elektronenstrahl in einem Brennpunkt (PF) zu fokussieren, der dem Transformationsmittel nachgelagert positioniert ist.

4. Schweißgerät (10) nach einem der vorhergehenden Ansprüche, **dadurch gekennzeichnet, dass** das Umlenkmittel (15) eine Spule (151) umfasst, die geeignet ist, ein Magnetfeld zu erzeugen, das im Wesentlichen senkrecht zu der ersten Achse (Z) ausgerichtet ist, wenn die Spule von einem elektrischen Strom durchflossen wird, wobei die Spule im Wesentlichen in der Verlängerung der ersten Achse (Z), hinter der zweiten Achse (X), positioniert ist.

5. Schweißgerät (10) nach dem vorhergehenden Anspruch, **dadurch gekennzeichnet, dass** das Umlenkmittel (15) einen magnetischen Kern (152), der im Inneren der Spule (151) angeordnet ist, eine erste metallische Platte (153), die mit dem magnetischen Kern über eine erste Polflanke (158) verbunden ist, eine zweite metallische Platte (154), die mit dem magnetischen Kern über eine zweite Polflanke (158) verbunden ist, umfasst, wobei die erste Platte und die zweite Platte symmetrisch beidseits der ersten Achse (Z) angeordnet sind, wobei die erste Platte und die zweite Platte jeweils eine Eintrittsseite (155) und eine Austrittsseite (156) umfassen, wobei die Eintrittsseite mit der zweiten Achse (X) einen Winkel (A1) zwischen 15° und 40° einschließlich bildet, wobei die Austrittsseite mit der ersten Achse (Z) einen Winkel (A2) zwischen 0° und 15° einschließlich bildet.

6. Schweißgerät (10) nach einem der vorhergehenden Ansprüche, **dadurch gekennzeichnet, dass** es ein Videoskop (16) umfasst, um ein Auftreffen des Elektronenstrahls zu beobachten, wobei sich das Videoskop im Wesentlichen entlang einer parallel zu der ersten Achse (Z) verlaufenden Achse erstreckt, wobei das Videoskop auf der Rückseite des Umlenkmittels (15) im Inneren eines Volumens positioniert ist, das durch die Projektion des Umlenkmittels entlang der ersten Achse definiert wird.

7. Schweißgerät (10) nach Anspruch 5 und nach Anspruch 6, **dadurch gekennzeichnet, dass** das Videoskop (16) parallel zu der ersten Achse (Z) zurückziehbar ist, und dadurch, dass es geeignet ist, sich zwischen der ersten Platte (153) und der zweiten Platte (154) zu erstrecken.

8. Schweißgerät (10) nach einem der vorhergehenden Ansprüche, **dadurch gekennzeichnet, dass** es eine Schutzblende (31) umfasst, um ein Element (18) des Schweißgeräts im Fall eines unbeabsichtigten Umlenkens des Elektronenstrahls vor dem Elektronenstrahl (FE) zu schützen,
und/oder,
dadurch, dass es ein Magnetfeldblockierelement (32) umfasst, das zwischen das Transformationsmittel (14) und das Umlenkmittel (15) gesetzt ist,
und/oder,
dadurch, dass es einen thermischen Schirm umfasst, insbesondere einen durch ein Kühlsystem gekühlten thermischen Schirm,
und/oder,
dadurch, dass es eine Schutzhaube umfasst, die so positioniert ist, dass sie ein zu schweißendes Werkstück und/oder ein Element des Schweißgeräts vor Metallspritzern, die aus einem zu schweißenden Werkstück stammen, schützt.

9. Schweißgerät (10) nach einem der vorhergehenden Ansprüche, **dadurch gekennzeichnet, dass** der Arm (13) insgesamt die Form eines Zylinders umfasst,
wobei der Zylinder eine Drehachse (Z1) umfasst, die um einen Wert (D2) ungleich null in Bezug auf die erste Achse versetzt ist,
und/oder
wobei der Zylinder einen Durchmesser (D1) kleiner als oder gleich 80 mm, insbesondere kleiner als oder gleich 70 mm, bevorzugt kleiner als oder gleich 60 mm umfasst, und/oder
wobei der Zylinder eine Länge (L1) entlang der ersten Achse (Z) größer als oder gleich 200 mm, insbesondere größer als oder gleich 400 mm, bevorzugt größer als oder gleich 600 mm umfasst.

10. Schweißgerät (10) nach einem der vorhergehenden Ansprüche, **dadurch gekennzeichnet, dass** es umfasst:
- ein Ablenkmittel (17) zum Ablenken des Elektronenstrahls (FE) und
- ein Detektionsmittel (18) zum Detektieren der Position des Elektronenstrahls, wobei das Detektionsmittel zwei Elektroden (181, 183) umfasst, die beidseits der ersten Achse (Z) angeordnet sind, wobei jede Elektrode geeignet ist, einen Kontakt mit dem Elektronenstrahl zu detektieren.

11. Schweißgerät (10) nach einem der Ansprüche 1 bis 9, **dadurch gekennzeichnet, dass** es umfasst:
- ein Ablenkmittel (17) zum Ablenken des Elektronenstrahls (FE) und
- ein Detektionsmittel (18) zum Detektieren der Position des Elektronenstrahls, wobei das Detektionsmittel vier Elektroden (181, 182, 183, 184) umfasst, die an den vier Seiten eines Quadrats um die erste Achse (Z) herum angeordnet sind, wobei jede Elektrode geeignet ist, einen Kontakt mit dem Elektronenstrahl zu detektieren.

12. Schweißausrüstung (1), **dadurch gekennzeichnet, dass** sie ein Gestell (3) umfasst, das dazu bestimmt ist, auf einem Boden zu stehen, und ein Schweißgerät (10) nach einem der vorhergehenden Ansprüche, wobei das Schweißgerät um die erste Achse (Z) herum in Bezug auf das Gestell (3) drehbeweglich ist.

13. Schweißverfahren zum Schweißen von zwei Werkstücken (20A, 20B), die eine zentrale Öffnung umfassen, mit einem Elektronenstrahl (FE), der von einem Schweißgerät (10) nach einem der Ansprüche 1 bis 11 oder von einer Schweißausrüstung (1) nach Anspruch 12 generiert wird, **dadurch gekennzeichnet, dass** es umfasst:
- einen Schritt des Positionierens der beiden Werkstücke, die dazu bestimmt sind, aneinandergeschweißt zu werden, um den Arm (13) des Schweißgeräts herum,
- einen Schritt des Kalibrierens des Transformationsmittels (14), um einen Elektronenstrahl zu erzeugen, der eine vorgegebene Dichteverteilung im Auslass des Schweißgeräts umfasst,
- einen Schritt des Projizierens eines Elektronenstrahls auf eine zwischen den beiden Werkstücken gebildete Grenzfläche.

14. Schweißverfahren nach dem vorhergehenden Anspruch, **dadurch gekennzeichnet, dass** der Schritt des Kalibrierens definiert wird, um einen Elektronenstrahl (FE) zu erzeugen, dessen Dichte entweder parallel zu einer zwischen den beiden Werkstücken (20A, 20B) gebildeten Grenzfläche (23) oder senkrecht zu einer zwischen den beiden Werkstücken (20A, 20B) gebildeten Grenzfläche (23) oder kreisförmig und gleichförmig oder gemäß jeder Zwischenform zwischen einer Verteilung parallel zu der Grenzfläche und einer kreisförmigen und gleichförmige Verteilung oder gemäß jeder Zwischenform zwischen einer Verteilung senkrecht zu der Grenzfläche und einer kreisförmigen und gleichförmigen Verteilung verteilt ist, und dadurch, dass der Schritt des Projizierens ein Schritt des Schweißens der beiden Werkstücke ist, insbesondere ein Schlüssellochschweißen, oder ein Schritt des Glättens einer Schweißung (22) oder ein Schritt des lokalen Ausbesserns einer Schweißung (22), insbesondere ein Schritt des Behandelns des Raupenendes einer Schweißung (22).

15. Schweißverfahren nach einem der Ansprüche 13 oder 14, **dadurch gekennzeichnet, dass** der Schritt des Kalibrierens definiert wird, um einen Elektronenstrahl zu erzeugen, dessen Dichte senkrecht zu einer zwischen den beiden Werkstücken (20A, 20B) gebildeten Grenzfläche (23) verteilt ist, und dadurch, dass der Schritt des Projizierens ein Schritt des Glättens einer zuvor zwischen den beiden Werkstücken gebildeten Schweißung ist.

16. Schweißverfahren nach einem der Ansprüche 13 bis 15, **dadurch gekennzeichnet, dass** der Schritt des Kalibrierens definiert wird, um einen Elektronenstrahl zu erzeugen, dessen Dichte kreisförmig und gleichförmig verteilt ist, und dadurch, dass der Schritt des Projizierens ein Schritt des lokalen Ausbesserns einer Schweißung oder ein Schritt des Behandelns des Raupenendes einer Schweißung (22) ist, wobei insbesondere die Leistung des Elektronenstrahls zunehmend bis auf null verringert wird, wenn der Elektronenstrahl das Ende der Schweißraupe erreicht.

17. Schweißverfahren nach einem der Ansprüche 13 bis 16, **dadurch gekennzeichnet, dass** die Elektronenkanone eine Anode und eine Kathode umfasst, wobei eine elektrische Spannung (U) zwischen der Anode und der Kathode kleiner als oder gleich 60 kV, insbesondere kleiner als oder gleich 45 kV bei dem Schritt des Projizierens ist.

18. Verfahren zum Einstellen eines Schweißgeräts nach Anspruch 10, **dadurch gekennzeichnet, dass** es umfasst:
- einen Schritt des oszillierenden Ablenkens des Elektronenstrahls, wobei der Elektronenstrahl in einer ersten Ebene oszilliert, die zwischen einer ersten Elektrode (181) und einer zweiten Elektrode (182) des Detektionsmittels (18) definiert ist, wobei die zweite Elektrode zu der ersten Elektrode in Bezug auf den Elektronenstrahl (FE) entgegengesetzt ist, wobei die Amplitude der Oszillation mit der Zeit zunimmt, dann
- einen Schritt des Detektierens eines Kontakts des Elektronenstrahls an einer Elektrode unter der ersten Elektrode und der zweiten Elektrode, dann
- einen Schritt des oszillierenden Ablenkens des Elektronenstrahls, wobei der Elektronenstrahl in der ersten Ebene oszilliert, wobei die Amplitude der Sinuskurve auf dem Wert aufrechterhalten wird, der zum Zeitpunkt des Kontakts des Elektronenstrahls an der Elektrode erreicht wird, wobei ein erstes mit der Zeit zunehmendes Offset auf den Elektronenstrahl angewandt wird, um ihn zunehmend zu der anderen Elektrode unter der ersten Elektrode und der zweiten Elektrode zu versetzen, dann
- einen Schritt des Detektierens eines Kontakts des Elektronenstrahls an der anderen Elektrode, dann
- einen Schritt des Zentrierens des Elektronenstrahls, indem der Elektronenstrahl zu der anderen Elektrode um einen Wert gleich dem ersten Offset (OF1), das auf den Elektronenstrahl zum Zeitpunkt seines Kontakts mit der anderen Elektrode angewandt wird, dividiert durch zwei, versetzt wird.

19. Verfahren zum Einstellen eines Schweißgeräts nach Anspruch 11, **dadurch gekennzeichnet, dass** es das Durchführen des Verfahrens zum Einstellen nach dem vorhergehenden Anspruch umfasst, dann
- einen Schritt des oszillierenden Ablenkens des Elektronenstrahls, wobei der Elektronenstrahl in einer zweiten Ebene oszilliert, die zwischen einer dritten Elektrode (183) und einer vierten Elektrode (184) des Detektionsmittels definiert ist, wobei die vierte Elektrode zu der dritten Elektrode in Bezug auf den Elektronenstrahl entgegengesetzt ist, wobei die zweite Ebene senkrecht zu der ersten Ebene verläuft, wobei die Amplitude der Oszillation mit der Zeit zunimmt, dann
- einen Schritt des Detektierens eines Kontakts des Elektronenstrahls an einer Elektrode unter der dritten und der vierten Elektrode, dann
- einen Schritt des oszillierenden Ablenkens des Elektronenstrahls, wobei der Elektronenstrahl in der zweiten Ebene oszilliert, wobei die Amplitude der Oszillation auf dem Wert aufrechterhalten wird, der zum Zeitpunkt des Kontakts des Elektronenstrahls an der Elektrode erreicht wird, wobei ein zweites mit der Zeit zunehmendes Offset auf den Elektronenstrahl angewandt wird, um ihn zunehmend zu der anderen Elektrode unter der dritten Elektrode und der vierten Elektrode zu versetzen, dann
- einen Schritt des Detektierens eines Kontakts des Elektronenstrahls an der anderen Elektrode, dann
- einen Schritt des Zentrierens des Elektronenstrahls, indem der Elektronenstrahl zu der anderen Elektrode hin um einen Wert gleich dem zweiten Offset, das auf den Elektronenstrahl zum Zeitpunkt seines Kontakts mit der anderen Elektrode angewandt wird, dividiert durch zwei, versetzt wird.

## Claims

1. An electron beam welding apparatus (10), comprising:
• an electron gun (11) capable of generating an electron beam (FE),
• a focusing means (12) capable of orienting the electron beam along a first axis (Z),
and **characterized in that** it comprises:
• an arm (13) extending parallel to the first axis, the arm comprising:
- a transformation means (14) for transforming a density distribution of the electron beam in a plane perpendicular to the first axis (Z), and
- a deflection means (15) for deflecting the electron beam along a second axis (X) substantially perpendicular to the first axis.

2. The welding apparatus (10) as claimed in the preceding claim, **characterized in that** the transformation means (14) comprises at least two coils, preferably at least four coils (141A, 141B, 141C, 141D), in particular at least six coils, the at least two coils forming a magnetic axis (AM1, AM2) substantially perpendicular to said first axis (Z), the at least two coils being distributed about said first axis so as to produce an alternation of North magnetic poles and South magnetic poles.

3. The welding apparatus (10) as claimed in either of the preceding claims, **characterized in that** the electron gun (11), the focusing means (12), the transformation means (14) and the deflection means (15) are arranged in this order along the path of the electron beam (FE), the focusing means comprising a variable focal length, the focusing means being capable of focusing the electron beam at a focal point (PF) positioned upstream of the transformation means and the focusing means being capable of focusing the electron beam at a focal point (PF) positioned downstream of the transformation means.

4. The welding apparatus (10) as claimed in one of the preceding claims, **characterized in that** the deflection means (15) comprises a coil (151) capable of producing a magnetic field oriented substantially perpendicular to said first axis (Z) when said coil is flowed through by an electric current, said coil being positioned substantially in the extension of the first axis (Z), behind said second axis (X).

5. The welding apparatus (10) as claimed in the preceding claim, **characterized in that** the deflection means (15) comprises a magnetic core (152) arranged inside said coil (151), a first metal plate (153) linked to the magnetic core by a first pole flank (158), a second metal plate (154) linked to the magnetic core by a second pole flank (158), the first plate and the second plate being arranged symmetrically on either side of said first axis (Z), the first plate and the second plate each comprising an entrance face (155) and an exit face (156), the entrance face forming an angle (A1) of between 15° and 40° inclusive with said second axis (X), the exit face forming an angle (A2) of between 0° and 15° inclusive with said first axis (Z).

6. The welding apparatus (10) as claimed in one of the preceding claims, **characterized in that** it comprises a video borescope (16) for observing an impact of the electron beam, the video borescope extending substantially along an axis parallel to said first axis (Z), the video borescope being positioned behind the deflection means (15) within a volume defined by the projection of the deflection means along said first axis.

7. The welding apparatus (10) as claimed in claim 5 and as claimed in claim 6, **characterized in that** the video borescope (16) is able to be retracted parallel to the first axis (Z), and **in that** it is able to extend between the first plate (153) and the second plate (154).

8. The welding apparatus (10) as claimed in one of the preceding claims, **characterized in that** it comprises a protective diaphragm (31) for protecting an element (18) of the welding apparatus from the electron beam (FE) in the event of accidental deflection of the electron beam,
and/or,
**in that** it comprises a magnetic field blocking element (32) interposed between the transformation means (14) and the deflection means (15),
and/or,
**in that** it comprises a heat shield, in particular a heat shield that is cooled by a cooling system,
and/or,
**in that** it comprises a protective cover positioned so as to protect a part to be welded and/or an element of the welding apparatus from metal projections coming from a part to be welded.

9. The welding apparatus (10) as claimed in one of the preceding claims,
**characterized in that** the arm (13) comprises the overall shape of a cylinder,
said cylinder comprising an axis of revolution (Z1) offset by a non-zero value (D2) with respect to said first axis,
and/or
said cylinder comprising a diameter (D1) less than or equal to 80 mm, in particular less than or equal to 70 mm, preferably less than or equal to 60 mm,
and/or
said cylinder comprising a length (L1) along said first axis (Z) greater than or equal to 200 mm, in particular greater than or equal to 400 mm, preferably greater than or equal to 600 mm.

10. The welding apparatus (10) as claimed in one of the preceding claims, **characterized in that** it comprises:
- a deflecting means (17) for deflecting the electron beam (FE), and
- a detection means (18) for detecting the position of the electron beam, the detection means comprising two electrodes (181, 183) arranged on either side of the first axis (Z), each electrode being capable of detecting contact with the electron beam.

11. The welding apparatus (10) as claimed in one of the claims 1 to 9, **characterized in that** it comprises:
- a deflecting means (17) for deflecting the electron beam (FE), and
- a detection means (18) for detecting the position of the electron beam, the detection means comprising four electrodes (181, 182, 183, 184) arranged on the four sides of a square about the first axis (Z), each electrode being capable of detecting contact with the electron beam.

12. A welding device (1), **characterized in that** it comprises a frame (3) intended to rest on a ground and a welding apparatus (10) as claimed in one of the preceding claims, the welding apparatus being able to move in rotation about said first axis (Z) with respect to the frame (3).

13. A method for welding two parts (20A, 20B) comprising a central aperture, by way of an electron beam (FE) generated by a welding apparatus (10) as claimed in one of claims 1 to 11 or by way of a welding device (1) as claimed in claim 12, **characterized in that** it comprises:
- a step of positioning the two parts that are intended to be welded to one another around the arm (13) of the welding apparatus,
- a step of calibrating the transformation means (14) so as to produce an electron beam comprising a predefined density distribution at the output of the welding apparatus,
- a step of projecting an electron beam onto an interface formed between the two parts.

14. The welding method as claimed in the preceding claim, **characterized in that** the calibration step is defined so as to produce an electron beam (FE) the density of which is distributed either parallel to an interface (23) formed between the two parts (20A, 20B) or perpendicular to an interface (23) formed between the two parts (20A, 20B), or in a circular and uniform manner, or in any intermediate form between a distribution parallel to the interface and a circular and uniform distribution, or in any intermediate form between a distribution perpendicular to the interface and a circular and uniform distribution, and **in that** the projection step is a step of welding the two parts, in particular a keyhole weld, or a step of smoothing a weld (22), or a step of locally repairing a weld (22), in particular a step of treating the end of the bead of a weld (22).

15. The welding method as claimed in either of claims 13 and 14, **characterized in that** the calibration step is defined so as to produce an electron beam the density of which is distributed perpendicular to an interface (23) formed between the two parts (20A, 20B), and **in that** the projection step is a step of smoothing a weld formed beforehand between the two parts.

16. The welding method as claimed in one of claims 13 to 15, **characterized in that** the calibration step is defined so as to produce an electron beam the density of which is distributed in a circular and uniform manner, and **in that** the projection step is a step of locally repairing a weld or a step of treating the end of the bead of a weld (22), the power of the electron beam in particular being gradually reduced to zero when the electron beam reaches the end of the weld bead.

17. The welding method as claimed in one of claims 13 to 16, **characterized in that** the electron gun comprises an anode and a cathode, a voltage (U) between the anode and the cathode being less than or equal to 60 kV, in particular less than or equal to 45 kV during the projection step.

18. A method for adjusting a welding apparatus as claimed in claim 10, **characterized in that** it comprises:
- a step of deflecting the electron beam in an oscillating manner, the electron beam oscillating in a first plane defined between a first electrode (181) and a second electrode (182) of the detection means (18), the second electrode being opposite the first electrode with respect to the electron beam (FE), the amplitude of the oscillation increasing over time, and then
- a step of detecting contact of the electron beam on an electrode from among the first electrode and the second electrode, and then
- a step of deflecting the electron beam in an oscillating manner, the electron beam oscillating in the first plane, the amplitude of the sinusoid being kept at the value reached at the time when the electron beam comes into contact on said electrode, a first offset that increases over time being applied to the electron beam so as to gradually shift it toward the other electrode from among the first electrode and the second electrode, and then
- a step of detecting contact of the electron beam on said other electrode, and then
- a step of centering the electron beam by shifting the electron beam toward said other electrode by a value equal to the first offset (OF1) applied to the electron beam at the time when it comes into contact with said other electrode divided by two.

19. A method for adjusting a welding apparatus as claimed in claim 11, **characterized in that** it comprises implementing the adjustment method as claimed in the preceding claim, and then
- a step of deflecting the electron beam in an oscillating manner, the electron beam oscillating in a second plane defined between a third electrode (183) and a fourth electrode (184) of the detection means, the fourth electrode being opposite the third electrode with respect to the electron beam, the second plane being perpendicular to the first plane, the amplitude of the oscillation increasing over time, and then
- a step of detecting contact of the electron beam on an electrode from among the third electrode and the fourth electrode, and then
- a step of deflecting the electron beam in an oscillating manner, the electron beam oscillating in the second plane, the amplitude of the oscillation being kept at the value reached at the time when the electron beam comes into contact on said electrode, a second offset that increases over time being applied to the electron beam so as to gradually shift it toward the other electrode from among the third electrode and the fourth electrode, and then
- a step of detecting contact of the electron beam on said other electrode, and then
- a step of centering the electron beam by shifting the electron beam toward said other electrode by a value equal to the second offset applied to the electron beam at the time when it comes into contact with said other electrode divided by two.
